# EUROPÄISCHE PATENTSCHRIFT

(11) **EP 0 963 239 B1**
(45) Veröffentlichungstag und Bekanntmachung des Hinweises auf die Patenterteilung: **31.07.2002**
(21) Anmeldenummer: 98908029.6
(22) Anmeldetag: 31.01.1998
(51) Int. Cl.: B01D 63/04, B01D 63/02, B01D 61/28, B01D 61/38, B01D 53/22, B01D 65/00, A61M 1/14, G01N 33/543

(54) **MEMBRANMODUL ENTHALTEND MINDESTENS ZWEI GRUPPEN VON HOHLFASERMEMBRANEN UND VERFAHREN ZU SEINER HERSTELLUNG**
MODULE MADE OF AT LEAST TWO-TYPE HOLLOW FIBRES, AND PRODUCTION OF SAME
MODULE A FIBRES CREUSES D'AU MOINS DEUX GROUPES, ET MODE DE FABRICATION

(30) Priorität: 04.02.1997 DE 19704005
(43) Veröffentlichungstag der Anmeldung: 15.12.1999
(73) Patentinhaber: MAT Adsorption Technologies GmbH & Co. KG, 63784 Obernburg (DE)
(72) Erfinder: BAURMEISTER, Ulrich, D-42115 Wuppertal (DE); SCHNEIDER, Klaus, D-63906 Erlenbach (DE); WOLLBECK, Rudolf, D-63906 Erlebach (DE)
(74) Vertreter: Fett, Günter
(86) Internationale Anmeldenummer: EP9800516
(87) Internationale Veröffentlichungsnummer: WO9833581

(56) Entgegenhaltungen:
- EP-A- 0 345 983
- EP-A- 0 515 034
- EP-A- 0 531 631
- DE-A- 2 652 856
- DE-A- 2 806 237

## Beschreibung

Die vorliegende Erfindung betrifft ein Verfahren zur Herstellung eines Membranmoduls, der mindestens zwei Gruppen von in schichtförmigen Lagen zueinander im wesentlichen parallel angeordnete Hohlfasermembranen enthält sowie einen solchen Modul.

In verschiedenen Prozessen der pharmazeutischen oder der chemischen Industrie ist es erforderlich, mehrstufige Extraktionsprozesse durchzuführen, bei denen eine in einer z.B. wässrigen Phase gelöste Komponente zunächst mittels einer organischen Phase extrahiert wird und diese Komponente anschließend mittels einer zweiten wässrigen Phase aus der organischen Phase abgetrennt wird. Solche mehrstufigen Prozesse lassen sich kombiniert als einstufige Prozesse in Membranmodulen durchführen, die zwei Gruppen von Hohlfasermembranen enthalten, wobei der Speisestrom (feed stream) durch die Hohlfasermembranen der einen Gruppe und der die abgetrennte Komponente schließlich enthaltende Strom (strip stream) durch die Hohlfasermembranen der zweiten Gruppe strömt. Der Außenraum um die Hohlfasermembranen ist mit der Extraktionsflüssigkeit gefüllt, die die zu extrahierende Komponente von den Hohlfasermembranen der ersten Gruppe zu den Hohlfasermembranen der zweiten Gruppe transportiert. Hierbei wirkt die die Hohlfasermembranen umgebende Flüssigkeit als Flüssigmembran. Derartige Prozesse werden in der Literatur auch als CLM (contained liquid membrane) Trennprozesse beschrieben (s. z.B. Majumdar u.a., AIChE Journal, Bd. 34 (1988), Nr. 7, S. 1135-1145; Sengupta u.a., AIChE Journal, Bd. 34 (1988), Nr. 10, S. 1698-1708; Basu u.a., J. of Membrane Science, Bd. 75 (1992), S. 131-149). Mittels dieser Trennprozesse können sowohl Komponenten aus flüssigen wie auch aus gasförmigen Medien abgetrennt werden. Die in der genannten Literatur skizzierten Membranmodule weisen zwei Gruppen von Hohlfasermembranen auf, die im Mittelteil des Gehäuses parallel zueinander nebeneinander angeordnet sind. An den Gehäuseenden werden die Enden der Hohlfasermembranen nach Gruppen getrennt beispielsweise über Y-förmige Endstücke mit entsprechenden Zuführeinrichtungen bzw. Ableiteinrichtungen verbunden.

Ähnliche Membranmodule, die zwei Gruppen von Hohlfasermembranen enthalten, sind auch aus dem Bereich der Biotechnologie bekannt. So wird in der US-A-5 043 260 ein Membranmodul zum Züchten und Erhalten von Hepatozyten für eine künstliche Leber beschrieben, der in seinem Mittelteil, das einen runden Querschnitt aufweist, ein Bündel von zwei miteinander vermischten Gruppen von parallel zueinander angeordneten Hohlfasermembranen enthält. Die Enden der Hohlfasermembranen sind nach Gruppen getrennt an den Enden des Modulgehäuses in Y-förmige Endstücke eingebettet. Auf den äußeren Oberflächen der Hohlfasermembranen sind die Hepatozyten immobilisiert, und über die Hohlfasermembranen der ersten Gruppe wird eine Nährflüssigkeit zugeführt und über die Hohlfasermembranen der zweiten Gruppe werden die Abfallstoffe abgeführt.

Die EP-A-514 021 offenbart Membranmodule, die für CLM-Trennprozesse geeignet sind, sowie ein Verfahren zu ihrer Herstellung. Hierbei wird zunächst z.B. eine einzelne Hohlfasermembran auf wellenförmigen und sich überkreuzenden Bahnen in mehreren Lagen auf einem entsprechenden Rahmen abgelegt und auf diese Weise ein Bündel hergestellt. In einem weiteren Schritt werden die bei der Ablage entstandenen Schlaufen an den Enden des Bündels durchtrennt und die nach dem Durchtrennen entstandenen Endstücke separat zusammengefaßt. Auf diese Weise entstehen im Bündel zwei Gruppen von miteinander vermischten Hohlfasermembranen, wobei nach Abnahme des Bündels vom Rahmen die Hohlfasermembranen im Bündel in sinusförmiger und sich teilweise überkreuzender Anordnung befinden.

Die erhaltenen Bündel werden in rohrförmige Gehäusemittelteile eingezogen und die Endstücke getrennt in die Arme von Y-förmigen Endstücken eingeführt, in denen sie eingebettet werden. Die Arme der Y-förmigen Endstücke werden so mit entsprechenden Einlaß- bzw. Auslaßeinrichtungen verbunden, daß die beiden Gruppen von Hohlfasermembranen getrennt von zwei verschiedenen Flüssigkeiten durchströmt werden können.

Diese Membranmodule gemäß der EP-A-514 021 weisen den Nachteil auf, daß die Hohlfasermembranen der beiden Gruppen entlang des gesamten Gehäuses unterschiedliche Abstände zueinander aufweisen und sich Zonen mit unterschiedlichem Füllgrad der Hohlfasermembranen ergeben können. Darüber hinaus erweist sich auch insbesondere dann, wenn höhere Gesamtfüllgrade der Hohlfasermembranen im Gehäuse erreicht werden sollen, das Einziehen der Bündel in die Gehäuseteile vor allem bei größeren Gehäuselängen als problematisch. Letztlich enthält ein Membranmodul entsprechend der EP-A-514 021 zwar zwei Gruppen von getrennt beschickbaren Hohlfasermembranen, jedoch müssen die Hohlfasermembranen der beiden Gruppen aufgrund des Herstellverfahrens des Moduls stets gleich sein.

Ein ähnliches Konzept wie in der EP-A-514 021 wird in der EP-A-515 034 verfolgt. Die Module gemäß der EP-A-515 034 enthalten ebenfalls Hohlfasermembrananordnungen, die zwei Gruppen von Hohlfasermembranen zugeordnet sind, wobei deren Enden nach Gruppen getrennt durch die Arme von Y-förmigen Endstücken geführt sind. Diese Anordnungen werden aus übereinandergestapelten Lagen aus entsprechend in der Breite und in der Länge bemessenen Stücken von Hohlfasermembran-Geweben aufgebaut, wobei die Hohlfasermembranen in den Geweben in Kettrichtung verlaufen. In den Geweben werden die Hohlfasermembranen durch z.B. monofile Schußfäden in zueinander paralleler Anordnung auf Abstand gehalten.

Diese Anordnungen aus übereinandergestapelten Hohlfasermembranlagen werden zunächst auf entsprechenden Vorrichtungen erstellt, indem alternierend Lagen der beiden Gruppen von Hohlfasermembranen aufeinandergestapelt werden. Im Mittelbereich liegen die Hohlfasermembranen der beiden Gruppen parallel zueinander vor, und die Endbereiche der Lagen werden alternierend nach Gruppen getrennt Y-förmig nach den Seiten weggeführt. Der fertige Stapel wird nach getrenntem Zusammenfassen der jeweiligen Endbereiche z.B. mittels eines Klebebands in das rohrförmige Mittelstück eines Gehäuses eingezogen und die Endbereiche in die Arme von Y-förmigen Endstücken eingebracht und dort eingebettet.

Die Membranmodule gemäß der EP-A-515 034 weisen zwar gegenüber denjenigen gemäß der EP-A-514 021 eine höhere Ordnung der Hohlfasermembranen und einen gleichmäßigeren Abstand der Hohlfasermembranen der ersten Gruppe zu denjenigen der zweiten Gruppe auf. Jedoch ist die Fertigung dieser Membranmodule durch die separate Fertigung der Hohlfasermembranstapel aufwendig und die Handhabung von Stapeln mit größerem Querschnitt schwierig. Darüber hinaus ist das Einziehen der Stapel in das Gehäuse vor allem bei größeren Gehäuselängen problematisch, wobei hierbei auch die Gefahr besteht, daß der vorher realisierte hohe Ordnungsgrad der Hohlfasermembranen wieder zunichte gemacht wird. Außerdem bestehen aufgrund der Fertigungstechnik auch hinsichtlich der Füllgrade Einschränkungen. Wegen der Einschränkungen bezüglich der Größe der Stapelquerschnitte und der Gehäuselängen lassen sich mit dem in der EP-A-515 034 beschriebenen Modul- und Fertigungskonzept letztlich auch nur Membranmodule mit vergleichsweise geringen Membranaustauschflächen realisieren. Darüber hinaus nimmt die Komplexität der Herstellung der Membranmodule gemäß der EP-A-515 034 in starkem Maße zu, wenn z.B. das System auf mehr als zwei Gruppen von Hohlfasermembranen erweitert werden soll oder spezielle Anordnungen der Gruppen von Hohlfasermembranen gefordert und spezielle Anforderungen an die Strömungsführung durch die Hohlfasermembranen der einzelnen Gruppen gestellt werden.

Dies gilt auch für die Membranmodule gemäß der EP-A-515 033, die sich von denjenigen gemäß der EP-A-515 034 dadurch unterscheiden, daß die Membranstapel aus mindestens einem Paar von übereinandergelegten Gewebebahnen aus Hohlfasermembranen bestehen, wobei die Gewebebahnen miteinander parallel zu den Hohlfasermembranen zick-zack-förmig gefaltet und zu einem Stapel aufeinandergelegt sind.

Der vorliegenden Erfindung liegt daher die Aufgabe zugrunde, ein Verfahren zur Verfügung zu stellen, mittels dessen sich Membranmodule der eingangs genannten Art mit einer großen Bandbreite an Ausführungsformen auf einfache und wirtschaftliche Weise herstellen lassen, wobei auch Membranmodule mit größeren Austauschflächen herstellbar sind, und mittels dessen sich in den so hergestellten Membranmodulen eine hohe Ordnung der Hohlfasermembranen und auch hohe Füllgrade der Hohlfasermembranen im Modulgehäuse realisieren lassen.

Der vorliegenden Erfindung liegt desweiteren die Aufgabe zugrunde, Membranmodule der eingangs genannten Art zur Verfügung zu stellen, bei denen sich hohe Ordnungsgrade der Hohlfasermembranen und auch hohe Füllgrade der Hohlfasermembranen im Modulgehäuse realisieren lassen, wodurch z.B. eine kontrollierte Strömung zwischen den Hohlfasermembranen der einzelnen Gruppen ermöglicht wird, die einfach herstellbar sind und eine große Bandbreite in bezug auf die Membranaustauschfläche und auf die Ausführungsform aufweisen, so daß sie für eine Vielzahl von unterschiedlichen Anwendungen einsetzbar sind.

Die Aufgabe wird zum einen gelöst durch ein Verfahren zur Herstellung eines Membranmoduls mit einem Gehäusemittelteil, enthaltend mindestens zwei in schichtförmigen Lagen angeordnete und getrennt beschickbare Gruppen von Hohlfasermembranen, wobei die Hohlfasermembranen innerhalb einer Gruppe sowie die Hohlfasermembranen unterschiedlicher Gruppen zumindest im Gehäusemittelteil zueinander im wesentlichen parallel angeordnet sind und jede Lage nur Hohlfasermembranen einer einzigen Gruppe enthält, wobei das Verfahren mindestens die folgenden Schritte umfaßt:
a) Auswahl eines rinnenförmigen, an seiner Oberseite offenen Gehäusemittelteils, welches an seinen Enden in ebenfalls an ihrer Oberseite offene Endstücke mit jeweils einer der Anzahl der Gruppen von Hohlfasermembranen entsprechenden Anzahl von Armen mündet, wobei das Gehäusemittelteil und die Endstücke zusammen eine Gehäuseschale ausbilden,
b) Einlegen der mindestens zwei Gruppen von Hohlfasermembranen jeweils in Form von schichtförmigen Lagen übereinander derart in das Gehäusemittelteil und in die Endstücke, daß die Hohlfasermembranen im wesentlichen in Richtung der Längserstreckung des Gehäusemittelteils und im wesentlichen parallel zueinander liegen und in den Armen der Endstücke enden, wobei die Enden unterschiedlicher Gruppen von Hohlfasermembranen in jeweils unterschiedlichen Armen der jeweiligen Endstücke angeordnet werden,
c) Verschließen des Gehäusemittelteils und der Endstücke mit einer Abdeckvorrichtung,
d) Einbetten der Enden der Hohlfasermembranen zumindest in den Armen der Endstücke mit einer Vergußmasse in der Weise, daß die Hohlfasermembranen mit mindestens dem einen ihrer Enden durch die Vergußmasse hindurchtreten und an diesem Ende geöffnet sind und daß zwischen den Hohlfasermembranen, der Innenwand des Gehäusemittelteils, der dem Gehäusemittelteil zugewandten Innenseite der Abdeckvorrichtung und den Vergußmassen ein Außenraum um die Hohlfasermembranen ausgebildet wird.

Die Aufgabe wird desweiteren durch einen Membranmodul gemäß Oberbegriff des Anspruchs 20 dadurch gelöst, daß das Gehäusemittelteil und die Endstücke mit ihren Armen in Form von an ihrer Oberseite offenen Rinnen ausgebildet sind und zusammen eine Gehäuseschale ausbilden, und daß das Gehäusemittelteil sowie die Endstücke an ihren Oberseiten mit einer Abdeckvorrichtung fluiddicht verschlossen sind.

Durch die erfindungsgemäße Verwendung eines nach oben offenen, rinnenförmigen Gehäusemittelteils und daran anschließenden ebenfalls nach oben offenen rinnenförmigen Endstücken ist es möglich, die Lagen der Hohlfasermembranen problemlos in das Gehäusemittelteil einzuschichten und die Enden der Hohlfasermembranen nach Lagen getrennt in die Arme der Endstücke von oben einzulegen. Hierbei können gleichzeitig in Anpassung an die beabsichtigte Verwendung auf einfache Weise verschiedenste Ausführungsformen des erfindungsgemäßen Moduls hergestellt bzw. bereitgestellt werden, wie z.B. durch Anpassung der Lagenzahl, der in den Lagen verwendeten Hohlfasermembranen, der Anzahl der Gruppen von Hohlfasermembranen oder der Durchströmbartkeit der verschiedenen Hohlfasermembranen, wie im folgenden noch ausgeführt wird.

Nach Befüllung mit den schichtförmigen Lagen der Gruppen von Hohlfasermembranen werden das Gehäusemittelteil und die daran anschließenden Endstücke, d.h. die Gehäuseschale, an ihrer Oberseite mittels einer Abdeckvorrichtung fluiddicht verschlossen. Die Abdeckvorrichtung kann aus einem oder mehreren Teilen bestehen und z.B. in Form eines Deckels dauerhaft beispielsweise durch Verschweißen oder Verkleben mit dem Gehäusemittelteil und mit den Endstücken verbunden sein. Bevorzugt wird diese Abdeckvorrichtung abnehmbar ausgeführt, beispielsweise mit dem Gehäusemittelteil und den Endstücken verschraubt und mit einer Dichtung abgedichtet. Die Abdeckvorrichtung kann vorteilhaft transparent ausgeführt werden oder weist ein Sichtfenster auf, um gegebenenfalls Veränderungen im Inneren des Moduls und insbesondere Undichtigkeiten der Hohlfasermembranen beobachten zu können.

In einer weiteren vorteilhaften Ausführungsform des erfindungsgemäßen Moduls ist die Abdeckvorrichtung ebenfalls als Gehäuseschale ausgeführt, d.h. ebenfalls ein rinnenförmiges, an seiner Oberseite offenes Mittelteil mit daran anschließenden rinnenförmigen und an ihrer Oberseite offenen Endstücken, wobei diese zweite Gehäuseschale bevorzugt identisch klappsymmetrisch zur ersten, unteren Gehäuseschale ist. Hierbei werden, ebenso wie in die untere Gehäuseschale, die mindestens zwei Gruppen von getrennt beschickbaren Hohlfasermembranen jeweils in schichtförmigen Lagen auch in die obere, zweite Gehäuseschale, d.h. die Abdeckvorrichtung eingelegt, so daß nach Zusammenfügen der beiden Gehäuseschalen der Innenquerschnitt des Mittelteils des Gehäuses vollständig und gleichmäßig mit Hohlfasermembranen gefüllt ist.

Bevorzugt sind Gehäusemittelteile mit einem rechteckigen oder quadratischen Innenquerschnitt. Bei derartigen Querschnitten des Gehäusemittelteils ist eine Anpassung der Lagenbreite an die Breite des Querschnitts nicht erforderlich, da eine einheitliche Breite der Lagen über der Gehäusehöhe vorliegt, und es kann gleichzeitig eine hohe Packungsdichte bzw. ein hoher Füllgrad der Hohlfasermembranen im Gehäuse erreicht werden. Hierbei ist es von besonderem Vorteil, wenn die Endstücke zumindest in Teilbereichen einen rechteckigen oder quadratischen Querschnitt aufweisen. Auf diese Weise läßt sich ein besonders einfaches Verfahren zur Herstellung z.B. der erfindungsgemäßen Membranmodule realisieren, welches bei einfacher Handhabung eine wirtschaftliche Herstellung solcher Membranmodule erlaubt. Gleichzeitig ist bei den so hergestellten und ausgeführten Membranmodulen eine über die gesamte Gehäusehöhe identische geometrische Ausführung benachbarter Lagen von Hohlfasermembranen möglich. Dies kann z.B. insbesondere bei solchen Anwendungen von Vorteil sein, bei denen eine gleichförmige und definierte Strömung zwischen benachbarten Lagen erforderlich ist.

In einer weiteren vorteilhaften Ausführung des erfindungsgemäßen Verfahrens bzw. des erfindungsgemäßen Membranmoduls weist das Gehäusemittelteil einen teilkreisförmigen Innenquerschnitt auf. Derartige Formen des Gehäusemittelteils lassen sich beispielsweise einfach aus rohrförmigen Vorprodukten herstellen, wobei die Endstücke jeweils ebenfalls runde oder teilkreisförmige Innenquerschnitte aufweisen. Hierdurch können die Anschlüsse wie z.B. Einlaß- und/oder Auslaßeinrichtungen schraubbar ausgeführt werden. Bei Gehäusemittelteilen mit teilkreisförmigen Innenquerschnitten sind solche mit halbkreisförmigem Innenquerschnitt bevorzugt, wobei dann auch die Abdeckvorrichtung in diesem Fall identisch klappsymmetrisch als Gehäuseschale ausgeführt ist, deren mittlerer Teil einen halbkreisförmigen Innenquerschnitt aufweist. Auf diese Weise wird ein Membranmodulgehäuse erhalten, das zumindest im Bereich des Gehäusemittelteils aus zwei Halbschalen besteht und dort einen kreisförmigen Innenquerschnitt aufweist. Derartige Gehäuseformen werden bevorzugt dann eingesetzt, wenn es bei der Anwendung darauf ankommt, daß im Bereich des Gehäusemittelteils der Innenquerschnitt rotationssymmetrisch um die Achse in Längserstreckung des Gehäusemittelteils ist oder daß der Innenquerschnitt keine Ecken aufweist, die gegebenenfalls zu Toträumen führen können.

Natürlich sind auch weitere Ausführungsformen des Innenquerschnitts des Gehäusemittelteils möglich wie z.B. eine stufenförmige Ausführung mit einer über der Gehäusehöhe zunehmenden Breite der Stufen. Die Höhe der Stufen ist vorzugsweise dann so bemessen, daß sie der Packungshöhe von 3 bis 6 Lagen von Hohlfasermembranen entspricht. Hierdurch ist nur eine stufenweise und keine kontinuierliche Anpassung der Lagenbreite an die Gehäusebreite erforderlich. Die Außenkontur bei derartigen stufenförmigen Innenquerschnitten kann dann dennoch kreisförmig sein.

Die Einbettung der Enden der Hohlfasermembranen mit einer Vergußmasse kann vor oder nach dem Aufbringen der Abdeckvorrichtung erfolgen. Es ist jedoch zweckmäßig, die Einbettung vorzunehmen, nachdem insbesondere die Endstücke mit einer Abdeckvorichtung verschlossen sind, da hierdurch ein sauberer Abschluß der Vergußmasse auch an der Oberseite gewährleistet ist. Hierbei reicht es für verschiedene Anwendungsfälle der erfindungsgemäßen Membranmodule aus, wenn die Hohlfasermembranen mit ihren Enden allein im Bereich der Arme oder auch nur in einem Teil dieser Arme eingebettet werden. In diesen Fällen wird der Außenraum um die Hohlfasermembranen durch die Innenwand des Gehäusemittelteils und gegebenenfalls des verbleibenden Teils der Endstücke, der Innenseite der Abdeckvorrichtung und die Vergußmassen begrenzt.

In anderen Fällen, wenn die Anwendung es beispielsweise erfordert, daß die Hohlfasermembranen in ihrem nicht eingebetteten Bereich eine hohe Ordnung aufweisen, also beispielsweise eine hohe Parallelität und einen definierten gleichmäßigen Abstand zueinander, kann es jedoch notwendig sein, die Hohlfasermembranen auch im Bereich der Enden des Gehäusemittelteils einzubetten. In diesen Fällen wird der Außenraum um die Hohlfasermembranen durch den verbleibenden Teil der Innenwand des Gehäusemittelteils und der Abdeckvorrichtung und durch die Vergußmassen begrenzt.

Bei Ausführungsformen, bei denen das Gehäuse aus einer unteren und einer oberen Gehäuseschale zusammengesetzt ist und in beiden Schalen die Gruppen von Hohlfasermembranen eingelegt sind, kann es zweckmäßig sein, die Hohlfaserenden vor dem Zusammenfügen der Gehäuseschalen in den einzelnen Gehäuseschalen getrennt in Vergußmassen einzubetten.

Erfindungsgemäß sind die Hohlfasermembranen nach Gruppen getrennt so an ihren Enden in eine Vergußmasse eingebettet, daß sie mit mindestens einem ihrer Enden durch die Vergußmasse hindurchtreten und an diesem Ende geöffnet sind. In einer bevorzugten Ausführungsform des erfindungsgemäßen Verfahrens bzw. des erfindungsgemäßen Membranmoduls werden bzw. sind die Hohlfasermembranen so in die Vergußmasse eingebettet, daß jeweils ihre beiden Enden durch die Vergußmasse hindurchtreten und geöffnet sind, wobei die Hohlfasermembranen der mindestens zwei Gruppen nach Gruppen getrennt mit jeweils ihrem einen geöffneten Ende mit einer Einlaßeinrichtung und mit ihrem anderen geöffneten Ende mit einer Auslaßeinrichtung in Verbindung stehen. Derartige Anordnungen von Hohlfasermembranen werden dann in der Regel im cross-flow-Modus durchströmt.

In einer weiteren bevorzugten Ausgestaltung der Erfindung sind die Hohlfasermembranen mindestens einer Gruppe an ihrem einen Ende verschlossen, während das andere Ende geöffnet ist. Diese Hohlfasermembranen werden im dead-end-Modus betrieben und sind dann natürlich nur von einen Ende, dem geöffneten Ende her beschickbar. Hierbei kann ein Fluid über diese einseitig geöffneten Hohlfasermembranen im dead-end-Modus in den Außenraum um die Hohlfasermembranen eingebracht werden oder ein Fluid aus dem Außenraum über diese Hohlfasermembranen abgezogen werden. Zur Definition der Begriffe dead-end-Modus und cross-flow-Modus sei auf die Veröffentlichung von V. Gekas: "Terminology for Pressure-Driven Membrane Operations", Desalination Vol. 68 (1988) 72-92, verwiesen.

Gruppen von nur einseitig geöffneten Hohlfasermembranen lassen sich beispielsweise dadurch erzeugen, daß die Hohlfasermembranen so in die Gehäuseschale eingelegt und in die Vergußmasse eingebettet werden, daß sie mit ihrem später verschlossenen Enden nicht durch die Vergußmasse hindurchtreten und so beim Einbetten noch flüssige Vergußmasse in diese Hohlfasermembranenden eintritt und sie verschließt. Bei einer Ausführungsform des erfindungsgemäßen Membranmoduls mit drei Gruppen von Hohlfasermembranen können z. B. die Hohlfasermembranen von zwei Gruppen einseitig geschlossen und die der dritten Gruppe beidseitig geöffnet sein, so daß in der Anwendung zwei Gruppen von Hohlfasermembranen im dead-end-Modus und eine Gruppe von Hohlfasermembranen im cross-flow-Modus betrieben werden. Eine Anwendung eines solchen Moduls ist beispielsweise die Züchtung von Zellkulturen, wobei über die eine im dead-end-Modus betriebenen Membrangruppe die Zufuhr von Nährstoffen, über die zweite die Abfuhr von Abfallprodukten oder auch von bestimmten Wirkstoffen und über die im cross-flow-Modus betriebene Membrangruppe mittels einer entsprechend ausgewählten Oxygenationsmembran die Versorgung der Zellen mit Sauerstoff erfolgen könnte.

Die jeweiligen Gruppen von Hohlfasermembranen können ihrerseits aus Untergruppen von Hohlfasermembranen bestehen, die unterschiedliche Funktionen haben. In einer bevorzugten Ausführungsform des erfindungsgemäßen Membranmoduls besteht mindestens eine Gruppe von Hohlfasermembranen aus mindestens zwei in schichtförmigen Lagen angeordneten Untergruppen von Hohlfasermembranen, wobei in einer besonders bevorzugten Ausführungsform innerhalb jeweils einer schichtförmigen Lage nur Hohlfasermembranen einer einzigen Untergruppe enthalten sind und die Hohlfasermembranen dieser mindestens einen Gruppe so eingebettet sind, daß sie nur an ihrem einen Ende geöffnet sind und die Endstücke, in denen die geöffneten Enden von Hohlfasermembranen unterschiedlicher Untergruppen eingebettet sind, sich an entgegengesetzten Enden des Gehäusemittelteils befinden.

Dies läßt sich beim erfindungsgemäßen Verfahren bzw. beim erfindungsgemäßen Membranmodul aufgrund der an seiner Oberseite offenen Gehäuseschale auf besonders einfache Weise dadurch erreichen, daß die Hohlfasermembranen der Untergruppen lagenweise bezüglich ihrer Längserstreckung etwas gegeneinander verschoben in die Gehäuseschale eingelegt werden. Dabei sind vor dem Einbetten die letztlich geschlossenen Hohlfaserenden zunächst noch offen, und die letztlich geöffneten Enden sind z.B. durch Abschweißen verschlossen und stehen gegenüber den letztlich geschlossenen Enden etwas über. Die Einbettung erfolgt dann so, daß zu Beginn des Einbettvorgangs jeweils beide Hohlfaserenden innerhalb der Vergußmasse liegen, wobei während des Einbettens noch flüssige Vergußmasse in die letzlich geschlossenen Enden eindringt und diese verschließt. Nach Aushärten der Vergußmassen werden die Vergußmassen mit den Hohlfaserenden senkrecht zu den Hohlfaserenden so beschnitten, daß die letztlich geschlossenen Enden sich innerhalb der Vergußmasse befinden und geschlossen bleiben, wohingegen die letztlich geöffneten Enden durch die Vergußmasse hindurchtreten und durch den Schnitt geöffnet werden. Die jeweils geöffneten Enden der Hohlfasermembranen werden dann mit einer Einlaß- oder einer Auslaßeinrichtung verbunden.

Natürlich sind auch weitere Kombinationen von im dead-end-Modus und im cross-flow-Modus betriebenen Gruppen bzw. Untergruppen von Hohlfasermembranen möglich.

Aufgrund der abnehmbaren Ausführung der Abdeckvorrichtung ist es auch gleichzeitig auf einfache Weise möglich, die im Gehäuse befindlichen Hohlfasermembranen auszutauschen, z.B. wenn Defekte an den Hohlfasermembranen aufgetreten sind oder die Standzeit der Hohlfasermembranen erreicht ist. Auf diese Weise läßt sich das Gehäuse mit dem Gehäusemittelteil, den Endstücken sowie der Abdeckvorrichtung mehrfach verwenden. Daher umfaßt die Erfindung ebenfalls ein Verfahren zum Auswechseln der Hohlfasermembranen bei einem mindestens zwei in schichtförmigen Lagen angeordnete und getrennt beschickbare Gruppen von Hohlfasermembranen enthaltenden Membranmodul, bei dem die Hahlfasermembranen innerhalb einer Gruppe sowie die Hohlfasermembranen unterschiedlicher Gruppen zueinander im wesentlichen parallel angeordnet sind und wobei jede Lage nur Hohlfasermembranen einer einzigen Gruppe enthält, welches Verfahren mindestens die Schritte, daß
a) bei der Herstellung des Moduls ein Gehäuse mit abnehmbarer Abdeckvorrichtung ausgewählt wird,
b) daß vor dem Auswechseln die Abdeckvorrichtung entfernt wird,
c) daß die im Gehäuse enthaltenen Hohlfasermembranen zusammen mit den Einbettungen an den Enden der Hohlfasermembranen aus dem Gehäuse entnommen werden und
d) daß anschließend ein Verfahren gemäß Anspruch 1 durchgeführt wird,
enthält.

Vorzugsweise enthält der erfindungsgemäße Membranmodul zwei Gruppen von Hohlfasermembranen. In diesem Fall weisen die Endstücke jeweils zwei Arme auf, so daß z.B. eine Y-förmige Gestalt der Endstücke resultiert. Generell, d.h. auch wenn der erfindungsgemäße Membranmodul mehr als zwei Gruppen von Hohlfasermembranen enthält, können die Arme der Endstücke auf verschiedene Weise ausgestaltet sein. So bilden in einer vorteilhaften Ausführung die Arme der Endstücke in bezug auf die Längsachse des Gehäusemittelteils einen Winkel von 0° aus, wodurch sich als Vorteil ergibt, daß nach dem Einbetten der Hohlfasermembranen in Vergußmassen ein gemeinsamer Endschnitt erfolgen kann und für die Einlaß- bzw. Auslaßeinrichtungen gemeinsame Endkappen mit verschiedenen Kammern eingesetzt werden können. Die Endstücke können dabei auch z.B. eine Verlängerung des Gehäusemittelteils darstellen und einschließlich ihrer Arme die gleiche Außenform wie das Gehäusemittelteil haben, wobei am Ende der Endstücke in Richtung der Längserstreckung des Gehäusemittelteils verlaufende Trennwände eingefügt sind, über die eine Separierung der Hohlfasermembranen nach Gruppen erfolgt. Jedoch sind auch andere Bauformen der Endstücke und unterschiedliche Querschnitte der Arme möglich, je nachdem, ob z.B. ein konstanter Füllgrad in Gehäusemittelteil und Endstücken, konstanter Abstand zwischen den Hohlfasermembranen innerhalb einer Lage oder dergleichen erwünscht ist oder sich aus sonstigen anwendungsbezogenen Gegebenheiten Anforderungen an die Ausführung der Endstücke ergeben.

Im Falle, daß der Membranmodul mehr als zwei Gruppen von Hohlfasermembranen enthält, weisen die Endstücke eine der Anzahl der Gruppen entsprechende Anzahl von Armen auf, die zweckmäßigerweise unter verschiedenen Winkeln abzweigen.

Die Gruppen von Hohlfasermembranen können lagenweise als Einzelkapillaren z.B. mittels automatischer Wickel- oder Ablegevorrichtungen in das Gehäusemittelteil und die Arme der Endstücke eingelegt werden, so daß die Längsachse der Hohlfasermembranen in Richtung der Längsachse des Gehäusemittelteils liegt. Bevorzugt werden jedoch die Hohlfasermembranen der einzelnen Gruppen vor dem Einlegen in das Gehäuse jeweils in Hohlfasermatten eingebunden, wodurch die Handhabung wesentlich erleichtert wird.

In diese Hohlfasermatten können die Hohlfasermembranen beispielsweise mittels flächiger, vorzugsweise streifenförmiger Verbindungselemente eingebunden werden, die bevorzugt einen gleichmäßigen Abstand zueinander aufweisen. Solche streifenförmigen Verbindungselemente können quer, aber auch unter einem anderen Winkel zu den zueinander im wesentlichen parallelen Hohlfasermembranen verlaufen und beispielsweise mittels eines punktförmig aufgetragenen Klebers z.B. auf Polyurethanbasis auf diese auflaminiert sein.

Bevorzugt werden die Hohlfasermembranen in die Hohlfasermatten aber mittels Querfäden z.B. in Form textiler Fäden eingebunden. Derartige Matten lassen sich nach bekannten Verfahren vorteilhaft als Wirkmatte oder Webmatte, aber auch als Webbändchen, Strick- oder als Häkelmatte herstellen. In den Fällen des Webens oder Wirkens sind die Querfäden die quer zu den Hohlfasermembranen verlaufenden Web- bzw. Kettfäden. Durch diese Querfäden werden die Hohlfasermembranen zueinander beabstandet und in zueinander im wesentlichen paralleler und stabiler Anordnung gehalten, wodurch sich eine hohe Ordnung der Hohlfasermembranen im Modul realisieren läßt.

Für verschiedene Anwendungen sind jedoch auch Hohlfasermatten bzw. mattenförmige Elemente aus Hohlfasermembranen einsetzbar, wie sie mittels des in der DE-OS-40 05 132 beschriebenen Verfahrens herstellbar sind. Gemäß dieser Schrift lassen sich derartige mattenförmigen Elemente durch Aufwickeln von Hohlfasermembranen in mehreren Wickellagen auf eine rotierende Trommel herstellen, wobei die Hohlfasermembranen durch geeignete Fadenführungsorgane so changiert werden, daß die Hohlfasermembranen innerhalb einer Wickellage zueinander im wesentlichen parallel angeordnet sind, die Hohlfasermembranen benachbarter Wickellagen in sich überkreuzender Anordnung befinden. Nach Beenden des Wickelvorgangs wird die aus den Wickellagen bestehende Wicklung auf dem Umfang der Wickeltrommel beispielsweise durch Abschweißen senkrecht zur Umfangsrichtung in Segmente gleicher Länge unterteilt. Durch das Abschweißen werden die Hohlfasermembranen in diesen Segmenten an ihren Enden miteinander verbunden, wodurch mattenförmige Elemente aus Hohlfasermembranen entstehen.

Derartige Elemente lassen sich im Rahmen der vorliegenden Erfindung einsetzen, wenn zum einen die Anzahl der Wickellagen klein ist und im Bereich kleiner als etwa 10 liegt. Zum anderen ist es erforderlich, daß beim Wickeln auf der Trommel der beim Changieren entstehende Umlenkwinkel der Hohlfasermembranen so eingestellt wird, daß sich die Hohlfasermembranen benachbarter Wickellagen unter kleinem Winkel kreuzen, wobei unter kleinen Winkeln solche von ≤ 15° verstanden werden. Bei einem derartigen Kreuzungswinkel bilden die Hohlfasermembranen gleichzeitig in bezug auf die Umfangsrichtung der Trommel Winkel <10° aus. Dies ist gleichzeitig der Winkel, den die Hohlfasermembranen in bezug auf die Längserstreckung des Gehäusemittelteils einnehmen, wenn die genannten mattenförmigen Elemente aus Hohlfasermembranen zu Herstellung des erfindungsgemäßen Membranmoduls als Lagen in das Gehäusemittelteil und die Endstücke eingelegt werden. In Rahmen der vorliegenden Erfindung werden daher Hohlfasermembranen, die sich maximal unter einem Winkel von 15° zueinander und zur Längserstreckung des Gehäusemittelteils erstrecken, als im wesentlichen parallel zueinander bzw. im wesenlichen parallel zur Längserstreckung des Gehäusemittelteils bezeichnet.

Gemäß einer bevorzugten Ausgestaltung des erfindungsgemäßen Verfahrens bzw. des erfindungsgemäßen Moduls werden bzw. sind die Hohlfasermatten aus den jeweiligen Gruppen von Hohlfasermembranen als Lagen übereinandergestapelt. Dabei können verschiedene Abfolgen der Lagen der verschiedenen Gruppen von Hohlfasermembranen eingestellt werden, so daß z.B. die Hohlfasermembranen einer Gruppe im Stapel in einem höheren Anteil vertreten sind als Hohlfasermembranen der verbleibenden Gruppen. In einer bevorzugten Ausführungsform sind die Lagen der Hohlfasermembranen so angeordnet, daß sich eine alternierende Abfolge der Lagen der verschiedenen Gruppen von Hohlfasermembranen ergibt. Dies gilt auch für den Fall, daß die Hohlfasermembranen als Einzelkapillaren, d.h. nicht in Form von Matten in das Gehäuse eingebracht werden.

Für den Fall, daß mindestens eine Gruppe von Hohlfasermembranen aus mindestens zwei in schichtförmigen Lagen angeordneten Untergruppen von Hohlfasermembranen besteht, sind vorzugsweise auch die einzelnen Lagen der Untergruppen in die alternierende Abfolge mit eingeschlossen. Bei einem zwei Gruppen von Hohlfasermembranen enthaltenden Membranmodul, bei dem beide Gruppen aus je zwei Untergruppen bestehen, kann dann z.B. eine alternierende Abfolge aus Hohlfasermembranen der ersten Untergruppe der ersten Gruppe, Hohlfasermembranen der ersten Untergruppe der zweiten Gruppe, Hohlfasermembranen der zweiten Untergruppe der ersten Gruppe und Hohlfasermembranen der zweiten Untergruppe der zweiten Gruppe vorliegen.

Gemäß einer weiteren bevorzugten Ausgestaltung des erfindungsgemäßen Verfahrens bzw. des erfindungsgemäßen Moduls wird mindestens eine Anordnung aus aufeinandergelegten Hohlfasermatten mit je einer Hohlfasermatte einer jeden Gruppe von Hohlfasermembranen in Abständen entsprechend der Breite des Gehäusemittelteils parallel zu den Hohlfasermembranen zick-zack-förmig zu einem Stapel gefaltet und der so erhaltene Stapel in das Gehäusemittelteil eingelegt, wobei die Enden der Hohlfasermembranen unterschiedlicher Gruppen in unterschiedliche Arme der jeweiligen Endstücke eingebracht werden, nachdem die Hohlfasermatten an ihren Enden zuvor nach Gruppen voneinander getrennt wurden. Zur Erleichterung des Trennens können die Hohlfasermatten an ihren Enden vor dem Aufeinanderlegen z.B. mit geeigneten Trennstreifen abgeklebt werden. Bei einem derartigen Aufbau des Stapels enthalten die einzelnen Lagen Hohlfasermembranen einer einzigen Gruppe. Allein in ihren Randbereichen können sie aufgrund der Faltung zusammen mit Matten, die Hohlfasermembranen einer anderen Gruppe enthalten, auch einzelne Hohlfasermembranen der anderen Gruppe bzw. der anderen Gruppen aufweisen. Die so aufgebauten Lagen sind im Rahmen der vorliegenden Erfindung jedoch ebenfalls als Lagen zu verstehen, die nur Hohlfasermembranen einer einzigen Gruppe enthalten.

In Abhängigkeit vom gewünschten Einsatz des erfindungsgemäßen Membranmoduls ist es von Vorteil, wenn zwischen benachbarten Lagen der Hohlfasermembranen ein definierter Abstand besteht. Dies ist beispielsweise dann von Bedeutung, wenn, wie ausgeführt, bei Durchführung eines Prozesses nach der CLM-Technik im Außenraum um die Hohlfasermembranen eine Flüssigkeit erforderlich ist, die als Flüssigmembran wirkt und die für den Transport einer abzutrennenden Komponente zur Vergleichmäßigung von Verweilzeiten zweckmäßigerweise eine definierte, möglichst gleichmäßige Dicke aufweist. Zur Einstellung des Abstandes zwischen den einzelnen Hohlfasermembranlagen kann zwischen die Lagen ein Abstandshalter eingebracht werden, beispielsweise in Form eines fluiddurchlässigen Vlieses. Eine Abstandshalterfunktion wird bei Verwendung von Hohlfasermatten aber bereits auch durch die Querfäden oder die streifenförmigen Verbindungselemente übernommen. Hiermit lassen sich auch relativ geringe Abstände zwischen den einzelnen Lagen realisieren und die Füllgrade im Gehäuse auf hohem Niveau halten.

Darüber hinaus ist es bei dem erfindungsgemäßen Verfahren bzw. bei dem erfindungsgemäßen Membranmodul auch auf einfache Weise möglich, in den Außenraum um die Hohlfasermembranen Trägermaterialien einzubringen, die mit bestimmten Funktionen ausgestattet sind. So können partikelförmige Trägermaterialien eingebracht werden wie z.B. Aktivkohle, um bestimmte Substanzen aus dem den Membranmodul durchströmenden Fluid adsorptiv zu entfernen. Es können auch schichtförmige Trägermaterialien etwa in Form von Flachmembranen oder Vliesen eingebracht werden, die mit funktionellen Gruppen ausgestattet sind, um z.B. affinitätschromatographisch selektiv Stoffe aus dem durchströmenden Fluid abzutrennen. Im Außenraum können auch z.B. Zellen eingeschlossen oder immobilisiert werden, wobei über die Hohlfasermembranen die Versorgung mit Nährflüssigkeit und Sauerstoff sowie die Entsorgung der Abfallstoffe erfolgt, so daß die erfindungsgemäßen Membranmodule sich hervorragend für Anwendungen im Bereich der Medizintechnik eignen. Z.B. kann in den Außenraum Vollblut eingebracht werden oder es können sich wie z.B. bei Anwendung des erfindungsgemäßen Membranmodule als künstliche Leber im Außenraum Hepatozyten befinden.

Es können Hohlfasermembranen mit verschiedenen äußeren Konturen, d.h. mit im Querschnitt betrachtet verschiedenen äußeren Umrissen eingesetzt werden. Die Hohlfasermembranen können beispielsweise eine im wesentlichen runde bzw. kreisförmige, dreieckige, viereckige, sechseckige oder achteckige Kontur aufweisen, sie können auch oval, elliptisch, dreilappig, vierlappig usw. ausgebildet sein. Zur Erzielung hoher Füllgrade werden bevorzugt Hohlfasermembranen mit näherungsweise dreieckiger, rechteckiger, quadratischer oder auch sechseckiger Konturen eingesetzt. Hierbei bezieht sich der Füllgrad auf das durch die äußere Kontur definierte Volumen der Hohlfasermembranen. Hohe Füllgrade lassen sich auch durch eine geeignete Verformung der verwendeten Hohlfasermembranen erzielen. So können beispielsweise Hohlfasermembranen mit runder Kontur in eine genähert rechteckige Form überführt werden, mittels derer sich höhere Füllgrade realisieren lassen, wenn man etwa eine Hohlfasermatte mit runden Hohlfasern kalandriert.

Für den Einsatz im erfindungsgemäßen Membranmodul haben sich Hohlfasermembranen bewährt, die eine Wandstärke zwischen 5 µm und 900 µm aufweisen, bestens bewährt haben sich Hohlfasermembranen mit einer Wandstärke zwischen 30 µm und 200 µm. Vorzugsweise beträgt der hydraulische Durchmesser des Lumens der eingesetzten Hohlfasermembranen 50 µm bis 1500 µm, besonders bevorzugt sind Hohlfasermembranen mit einem hydraulischen Durchmesser des Lumens zwischen 100 µm und 500 µm mit der Definition des hydraulischen Durchmessers als 4*A/U, wobei A die Fläche des Strömungsquerschnitts des Hohlfaserlumens und U den Umfang des Strömungsquerschnitts des jeweiligen Hohlfaserlumens bezeichnet.

Je nach Aufbau des Stapels können die Hohlfasermembranen der einzelnen Gruppen, hinsichtlich ihrer geometrischen Ausführung gleich sein oder verschieden. So ist es beispielsweise in vielen Fällen zweckmäßig, bei einem Aufbau des Stapels, bei dem eine alternierende Abfolge der Lagen der verschiedenen Gruppen von Hohlfasermembranen vorliegt, die Hohlfasermembranen der einzelnen Gruppen gleich auszubilden. Hingegen kann es bei einem Aufbau des Stapels, bei dem die Lagen einer Gruppe von Hohlfasermembranen in größerer Anzahl vorhanden ist als diejenigen der anderen Gruppen, von Vorteil sein, wenn der hydraulische Durchmesser der Hohlfasermembranen, die in der in geringerem Anteil vorliegenden Sorte von Lagen beinhaltet sind, größer ausgeführt ist. Entsprechend können auch Unterschiede zwischen den Hohlfasermembranen einzelner Untergruppen einer Gruppe von Hohlfasermembranen bestehen.

Die Anforderungen an den Aufbau der Hohlfasermembranen oder an ihre Struktur resultieren aus der jeweiligen Anwendung des Membranmoduls. Die Hohlfasermembranen können nicht porös sein oder auch porös, wobei im letzteren Fall die Membranen, je nachdem ob es sich um eine Anwendung zur Nanofiltration, Ultrafiltration oder Mikrofiltration handelt, mittlere Porengrößen von wenigen Å bis hin zu solchen im Bereich von einigen µm aufweisen können. Die Membranstruktur, d.h. die Porengrößenverteilung kann über die Dicke isotrop sein, d.h. innerhalb der Membranstruktur sind die Porendurchmesser im wesentlichen konstant, sie kann aber auch anisotrop, symmetrisch oder asymmetrisch sein, und es können auch Mehrschichtmembranen eingesetzt werden. Im Einzelfall können auch Hohlfasermembranen mit einer nicht porösen, dichten Wand eingesetzt werden, die bei der Anwendung des erfindungsgemäßen Moduls keine Stoffaustausch-, sondern Wärmeaustauschfunktionen erfüllen.

Abhängig von der gewünschten Anwendung des erfindungsgemäßen Membranmoduls können die Hohlfasermembranen der verschiedenen Gruppen gleich sein oder auch unterschiedlich. Unterschiede können sich beispielsweise außer - wie bereits ausgeführt - auf ihre Durchmesser auch auf ihre Porenstruktur oder ihre Porendurchmesser beziehen. Gleiches gilt auch bezüglich der Hohlfasermembranen einzelner Untergruppen einer Gruppe von Hohlfasermembranen.

Hinsichtlich des Materials, aus dem die Hohlfasermembranen aufgebaut sind, sind keinerlei Einschränkungen gegeben. So können die Membranen aus anorganischen Materialien wie Glas, Keramik, SiO₂, Kohlenstoff, Metall oder aus organischen Polymeren oder Mischungen daraus eingesetzt werden. Die Polymeren können hydrophilen und/oder hydrophoben Charakter aufweisen, sie können ausgewählt sein aus der Gruppe der cellulosischen Polymeren, wie z.B. Cellulose oder regenerierte Cellulose, modifizierte Cellulose, wie z.B. Celluloseester, Celluloseäther, aminmodifizierte Cellulosen, sowie Mischungen von cellulosischen Polymeren, aus der Gruppe der synthetischen Polymeren wie z.B. Polyacrylnitril und entsprechenden Copolymere, Polyurethan enthaltende Polymere, Polyarylsulfone und Polyarylethersulfone, wie z.B. Polysulfon oder Polyethersulfon, Polyvinylidenfluorid, polytetrafluorethylen, wasserunlösliche Polyvinylalkohole, aliphatische und aromatische Polyamide, Polyimide, Polyetherimide, Polyester, Polycarbonate, Polyolefine, wie Polyethylen, Polypropylen, Polyvinylchlorid, Polyphenylenoxid, Polybenzimidazole und Polybenzimidazolone, sowie daraus gewonnenen Modifikationen, Blends, Mischungen oder Copolymeren dieser Polymeren. Diesen Polymeren bzw. Polymergemischen können weitere Polymere wie z.B. Polyethylenoxid, Polyhydroxyether, Polyethylenglykol, Polyvinylpyrrolidon, Polyvinylalkohol oder Polycaprolacton, oder anorganische Stoffe wie z.B. SiO₂ als Zusatzstoffe beigemischt werden. Im Einzelfall kann die Membran auch z.B. einer Oberflächenmodifikation unterzogen worden sein, um bestimmte Eigenschaften der Membranoberfläche z.B. in Form bestimmter funktioneller Gruppen einzustellen. Sie können auch bestimmte stoffspezifisch wirkende Gruppen z.B. in Form von Liganden für affine Trennverfahren, Enzyme oder Katalysatoren aufweisen, die auf und/oder in den Membranen, d.h. auf deren äußeren und/oder deren inneren, durch die Poren gebildeten Oberflächen immobilisiert sind, oder es können an die Membranen auch Viren oder Zellen gebunden sein.

Die Materialien, aus denen die Hohlfasermembranen der einzelnen Gruppen oder, wenn vorhanden, auch der einzelnen Untergruppen bestehen, können gleich oder auch unterschiedlich sein. Bevorzugt wird die Verwendung eines einheitlichen Materials für die Membranen.

Hinsichtlich der geometrischen Abmessungen der mittels des erfindungsgemäßen Verfahrens hergestellten Membranmodule sind keinerlei Grenzen gesetzt. So lassen sich problemlos Membranmodule mit Längen des Gehäusemittelteils zwischen 20 mm und 2 m, sowie mit Gehäusebreiten und Gehäusehöhen zwischen 5 und 200 mm herstellen. Als Materialien für das Gehäuse, d.h. insbesondere für das Gehäusemittelteil, die Endstücke und die Abdeckvorrichtung haben sich vor allem Metalle oder polymere Werkstoffe bewährt. Hierbei können das Gehäusemittelteil und die Endstücke jeweils aus mehreren Teilen zusammengesetzt sein, sie können aber auch zusammen aus einem Stück gefertigt sein, wobei problemlos z.B. auch Spritzgußteile eingesetzt werden können.

Das Modulgehäuse weist an den freien Enden der Arme der Endstücke Einlaß- bzw. Auslaßeinrichtungen auf, die jeweils mit den geöffneten Enden der in den Armen eingebetteten Hohlfasermembranen in Verbindung stehen. Hierdurch stehen die Hohlfasermembranen jeder Gruppe, wenn sie an ihren beiden Enden geöffnet sind, mit einer Einlaßeinrichtung und einer Auslaßeinrichtung in Verbindung und sind getrennt mit einem Fluid beschickbar. Im Betrieb strömt dann beispielsweise bei einem zwei Gruppen von Hohlfasermembranen enthaltenden Membranmodul ein erstes Fluid über eine erste Einlaßeinrichtung in das Lumen der ersten Gruppe von Hohlfasermembranen, durchströmt diese und verläßt das Gehäuse über die mit diesen Hohlfasermembranen verbundene erste Auslaßeinrichtung. Ebenso strömt ein zweites Fluid über die zweite Einlaßeinrichtung in das Lumen der zweiten Gruppe von Hohlfasermembranen, durchströmt diese und verläßt das Gehäuse über die zweite Auslaßeinrichtung. Hierbei können die Fluide in Abhängigkeit von der jeweiligen Anwendung im Gleichstrom oder im Gegenstrom durch das Gehäuse geführt werden, wobei sich im einen Fall z.B. die Einlaßeinrichtungen an demselben Ende des Gehäuses befinden, während sie sich im anderen Fall an unterschiedlichen Enden befinden. In Fällen, in denen Hohlfasermembranen einer Gruppe oder Untergruppe nur an einem ihrer Enden geöffnet sind und in der Anwendung dann im dead-end Modus betrieben werden, stehen die geöffneten Enden mit einer Einlaßeinrichtung oder einer Auslaßeinrichtung in Verbindung.

Bei verschiedenen Anwendungen kann es von Bedeutung sein, daß die im Außenraum um die Hohlfasermembranen befindliche Flüssigkeit stationär im Außenraum vorliegt, d.h. stagniert und insbesondere keiner Konvektionsströmung unterworfen wird. Solche unerwünschten Strömungen können beispielsweise bei CLM-Prozessen auftreten. So können bei einem Membranmodul mit zwei Gruppen von Hohlfasermembranen, bei dem eine im Außenraum befindliche Flüssigkeit als Flüssigmembran und Träger für eine abzutrennende Komponente dient, Konzentrationsunterschiede in der im Außenraum befindlichen Flüssigkeit auftreten und zu Dichteunterschieden und damit zum Auftreten von unerwünschten Zirkulationsströmungen entlang der Längserstreckung des Moduls führen.

In einer bevorzugten Ausführung weist daher der erfindungsgemäße Membranmodul im Außenraum um die Hohlfasermembranen entlang der Längserstreckung des Gehäusemittelteils mindestens eine zu dieser Längserstreckung im wesentlichen quer verlaufende Trennvorrichtung auf. Gemäß einer besonders bevorzugten Ausführung unterteilt die mindestens eine Trennvorrichtung den Außenraum in zumindest im wesentlichen fluiddicht voneinander getrennte Kammern.

In anderen Anwendungsfällen, bei denen eine Durchströmung des Außenraums durch ein dort befindliches Fluid erfolgt, kann es zur Erhöhung des Stoffübergangs an der Außenseite der Hohlfasermembranen von Vorteil sein, wenn im Außenraum eine Querströmung des dort befindlichen Fluids quer zu den Hohlfasermembranen beispielsweise durch Umlenkungen induziert wird. Dies läßt sich durch Trennvorrichtungen im Außenraum erreichen, die sich nur über einen Teil des Querschnitts des Gehäusemittelteils erstrecken, z.B. zwar über die gesamte Höhe, jedoch nur über einen Teil der Breite des Gehäusemittelteils. Gemäß einer ebenfalls besonders bevorzugten Ausführungsform des erfindungsgemäßen Moduls erstreckt sich daher die mindestens eine Trennvorrichtung über einen Teil des Querschnitts des Gehäusemittelteils.

Derartige Trennvorrichtungen lassen sich in den Außenraum bei der Herstellung der erfindungsgemäßen Membranmodule in einfacher Weise einbringen, indem etwa beim Einlegen der Hohlfasermembranlagen mittels z.B. spezieller Epoxidharze, Polyurethanharze oder Heißschmelzkleber Streifen im wesentlichen quer zur Längserstreckung des Gehäusemittelteils über die jeweils in das Gehäusemittelteil eingelegte Lage von Hohlfasermembranen aufgetragen werden, die die Hohlfasermembranen der betreffenden Lage vorzugsweise auch gleichzeitig umschließen. Im dem bevorzugten Fall, daß der Außenraum in zumindest im wesentlichen fluiddicht voneinander getrennte Kammern unterteilt werden soll, wird dieser Vorgang nach jeder Lage wiederholt und Streifen jeweils an der gleichen Stelle entlang des Gehäuseunterteils übereinander aufgetragen. Im ebenfalls bevorzugten Fall, daß die Trennwände als Umlenkorgane für die Strömung im Außenraum um die Hohlfasermembranen dienen, können die Steifen sich beispielsweise auch nur über einen Teil der Gehäusemittelteilbreite oder der Gehäusehöhe erstrecken und an verschiedenen Positionen entlang der Längserstreckung des Gehäusemittelteils angebracht sein.

In Einzelfällen kann es auch ausreichend sein, mittels geeigneter Abstandshalter, die zwischen die einzelnen Lagen der Hohlfasermembranen eingebracht wurden, derartige Trennvorrichtungen aufzubauen. Eine weitere Möglichkeit besteht darin, im Falle der Verwendung von Hohlfasermatten die Querfäden oder die streifenförmigen Verbindungselemente, mittels derer die Hohlfasermembranen in die Hohlfasermatten eingebunden sind, so im Stapel zu positionieren, daß diese Querfäden bzw. diese Verbindungselemente in den übereinandergestapelten Lagen direkt übereinanderliegen und so für eine zumindest teilweise Abdichtung des Außenraums um die Hohlfasermembranen sorgen.

In einer weiteren vorteilhaften Ausführungsform weist der erfindungsgemäße Modul mindestens eine Trennvorrichtung auf, die zwar den Außenraum in voneinander getrennte Kammern unterteilt, die aber fluiddurchlässige Elemente aufweist, über die die an die Trennvorrichtung angrenzenden Kammern miteinander in Fluidverbindung stehen und die eine kontrollierte Strömung zwischen den angrenzenden Kammern erlauben. Derartige gezielt fluiddurchlässige Trennvorrichtungen können z.B. dadurch erhalten werden, daß in ansonsten fluidundurchlässige Trennvorrichtungen beispielsweise einzelne Kapillarröhrchen mit geringen Strömungsquerschnitten eingesetzt werden. Solche Trennvorrichtungen ermöglichen beispielsweise ein Befüllen des gesamten Außenraums mit einer Flüssigkeit, ohne daß jede Kammer mit separaten Einlaß- und/oder Auslaßeinrichtungen versehen werden müßte. Für den Fall, daß z.B. gleichzeitig Zirkulationsströmungen im Außenraum vermieden werden sollen, muß natürlich die Durchlässigkeit der Trennvorrichtungen entsprechend gering sein.

Der Außenraum um die Hohlfasern herum ist zumindest zur Befüllung mit einer Einlaßeinrichtung versehen. In anderen Fällen weist er eine Einlaßeinrichtung und eine Auslaßeinrichtung auf, so daß eine Durchströmung des Außenraums mit einem Fluid oder bei Befüllung des Außenraums mit einer Flüssigkeit eine Entlüftung erfolgen kann. Für den Fall, daß der Außenraum mittels der beschriebenen Trennvorrichtungen in im wesentlichen fluiddicht voneinander getrennte Kammern unterteilt ist, weist zumindest eine dieser Kammern zumindest eine Einlaßeinrichtung auf.

Im Außenraum um die Hohlfasermembranen, aus Platzgründen vorzugsweise im Bereich der Endstücke, können auch Sensoren verschiedener Art eingebracht sein, mittels derer eine Kontrolle der physiko-chemischen Bedingungen im Außenraum während des Einsatzes der erfindungsgemäßen Membranmodule erfolgen kann. Beispielsweise kann mittels eines geeigneten Sensors z.B. aus Veränderungen der Leitfähigkeit oder des pH-Wertes auf Undichtigkeiten der Hohlfasermembranen geschlossen werden, wenn sich die durch die Hohlfasermembranen und die im Außenraum befindlichen Flüssigkeiten in diesen Eigenschaften unterscheiden.

Die Erfindung wird nachfolgend anhand der Zeichnungen näher erläutert. Es zeigen in vereinfachter schematischer Darstellungsweise:
- Fig. 1:: Längsschnitt durch einen erfindungsgemäßen Membranmodul mit zwei Gruppen von Hohlfasermembranen.
- Fig. 2:: Querschnitt A-A durch den in Figur 1 dargestellten erfindungsgemäßen Membranmodul.
- Fig. 3:: Längsschnitt durch einen erfindungsgemäßen Membranmodul mit zwei Gruppen von Hohlfasermembranen und mit einer Trennvorrichtung, die den Außenraum in zwei Kammern unterteilt .
- Fig. 4:: Querschnitt B-B durch den in Figur 3 dargestellten erfindungsgemäßen Membranmodul.
- Fig. 5:: Längsschnitt durch einen erfindungsgemäßen Membranmodul mit zwei Gruppen von Hohlfasermembranen und mit über einen Teil der Gehäusebreite sich erstreckenden Trennvorrichtungen.
- Fig. 6:: Querschnitt C-C durch den in Figur 5 dargestellten erfindungsgemäßen Membranmodul.
- Fig. 7:: Draufsicht auf einen erfindungsgemäßen Membranmodul mit abnehmbarer Abdeckvorrichtung.

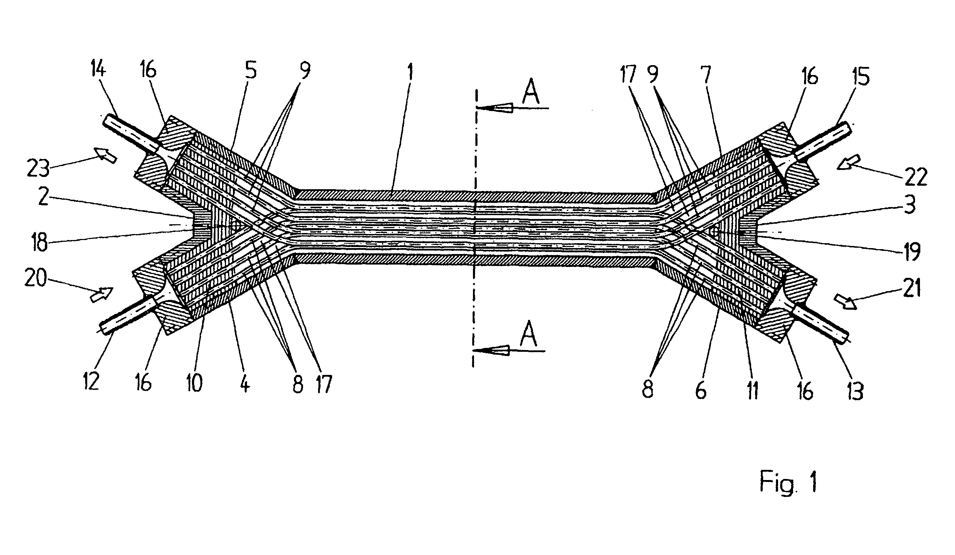

Figur 1 zeigt in schematischer Darstellung einen Längsschnitt durch einen erfindungsgemäßen Membranmodul, dessen Gehäuse ein Gehäusemittelteil 1 mit rechteckigem Querschnitt aufweist, das an seiner Oberseite offen ist und an seinen Enden in ebenfalls an ihrer Oberseite offenen Y-förmige Endstücke 2,3 mit jeweils zwei Armen 4,5 bzw. 6,7 mit in diesem Beispiel rechteckigem Querschnitt übergehen. Im Gehäusemittelteil sind zwei Gruppen von Hohlfasermembranen 8,9 in schichtförmigen Lagen übereinander so angeordnet, daß die Hohlfasermembranen zueinander und zur Längserstreckung des Gehäusemittelteils 1 parallel sind. Der Übersichtlichkeit halber sind pro Lage nur vier Kapillaren eingezeichnet.

Im Bereich ihrer Enden sind die Hohlfasermembranen 8,9 nach Gruppen getrennt in die Arme der Endstücke eingelegt und dort mittels der Vergußmassen 10,11 so in diese eingebettet, daß sie durch die Vergußmassen 10,11 hindurchtreten und an ihren Enden geöffnet sind. Hierbei sind die Enden der Hohlfasermembranen 8 der ersten Gruppe in den Armen 4 und 6 und diejenigen der Hohlfasermembranen 9 der zweiten Gruppe in den Armen 5 und 7 angeordnet. Natürlich sind auch andere Anordnungen denkbar, beispielsweise, daß die Hohlfasermembranen 8 der ersten Gruppe in den Arme 4 und 7 und diejenigen der zweiten Gruppe in die Arme 5 und 6 eingelegt sind.

Die Lumina der Hohlfasermembranen 8 der ersten Gruppe sind mit der Einlaßeinrichtung 12 und der Auslaßeinrichtung 13, die Lumina der Hohlfasermembranen 9 der zweiten Gruppe mit der Einlaßeinrichtung 15 und der Auslaßeinrichtung 14 verbunden, wobei die Einlaß- bzw. Auslaßeinrichtungen mittels Endkappen 16 an den Enden der Arme 4-7 befestigt sind. Der Außenraum 17 um die Hohlfasermembranen 8,9 weist eine Einlaßeinrichtung 18 und eine Auslaßeinrichtung 19 auf, die im Boden des Gehäuses angeordnet sind und sich in dieser Darstellung senkrecht zur Zeichenebene nach unten erstrecken. Im dargestellten Beispiel werden die Hohlfasermembranen 8,9 der beiden Gruppen im Gegenstrom durchströmt. Dies ist durch die Pfeile 20,21 bzw. 22,23 angedeutet, die in Richtung der Durchströmung weisen.

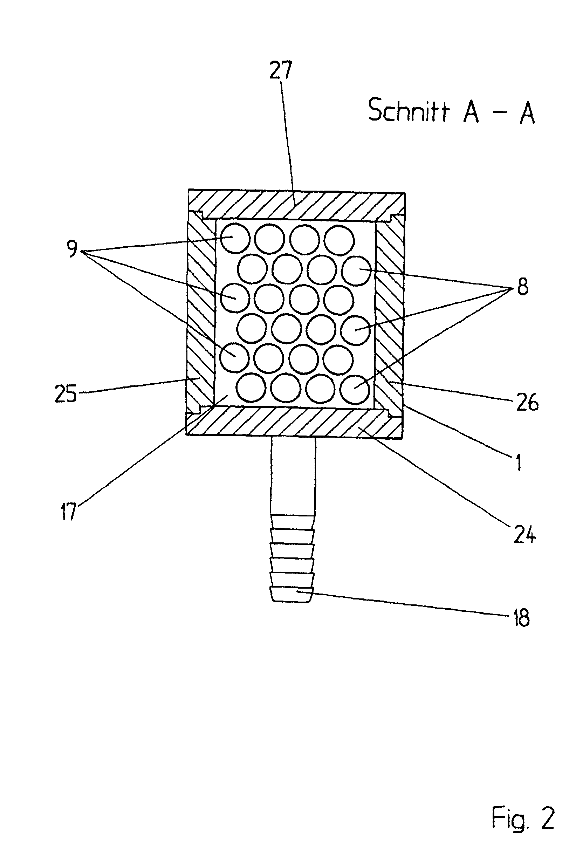

Figur 2 zeigt vergrößert einen Querschnitt durch das Gehäusemittelteil des in Figur 1 dargestellten Membranmoduls entsprechend dem dort angegebenen Schnitt A-A. Der Boden 24 bildet zusammen mit den Seitenwänden 25,26 das rinnenförmige Gehäusemittelteil 1 mit rechteckigem Querschnitt. Alternativ kann natürlich das Gehäusemittelteil aus einem einzigen rinnenförmig ausgebildeten Teil mit rechteckigem oder quadratischem Querschnitt bestehen. Im Boden 24 befindet sich in dieser Darstellung erkennbar die mit dem Außenraum 17 um die Hohlfasermembranen in Verbindung stehende Einlaßeinrichtung 18. In das Gehäusemittelteil sind die beiden Gruppen von Hohlfasermembranen 8,9 lagenweise in alternierender Abfolge so eingeschichtet, daß der Querschnitt des Gehäusemittelteils ausgefüllt ist. Die einzelnen Lagen enthalten dabei entweder nur Hohlfasermembranen 8 der ersten Gruppe oder nur Hohlfasermembranen 9 der zweiten Gruppe. Das Gehäusemittelteil ist an seiner Oberseite mit einer Abdeckvorrichtung 27 in Form eines Deckels verschlossen, der im gezeigten Fall beispielsweise aufgeklebt ist. Das Anbringen des Deckels erfolgt nach Einlegen der Hohlfasermembranen in das Gehäusemittelteil und die daran anschließenden Endstücke.

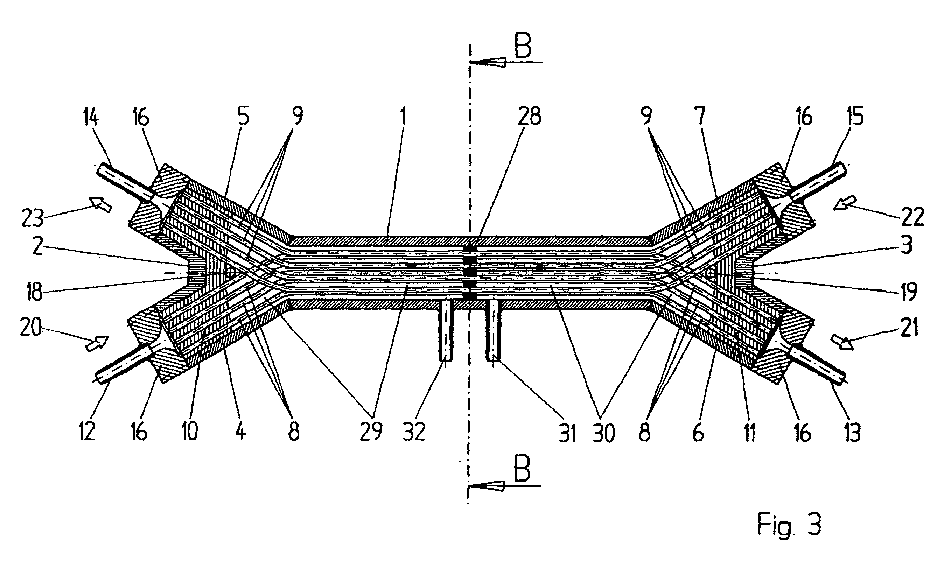

In Figur 3 ist ein Membranmodul dargestellt, der in seinem Aufbau mit dem in Figur 1 gezeigten Modul übereinstimmt mit der Ausnahme, daß der Membranmodul gemäß Figur 3 im Gehäusemittelteil 1 entlang der Längserstreckung des Gehäusemittelteils 1 eine Trennvorrichtung 28 aufweist, die an dieser Stelle den Querschnitt des Gehäusemittelteils 1 um die Hohlfasermembranen 8,9 vollständig ausfüllt und damit den Außenraum um die Hohlfasermembranen 8,9 in zwei im wesentlichen fluiddicht voneinander getrennte Kammern 29,30 unterteilt. Die beiden Kammern 29,30 weisen jeweils eine Einlaßeinrichtung 18 bzw. 31 und eine Auslaßeinrichtung 32 bzw. 19 auf, so daß sie getrennt von einem Fluid durchströmt werden können.

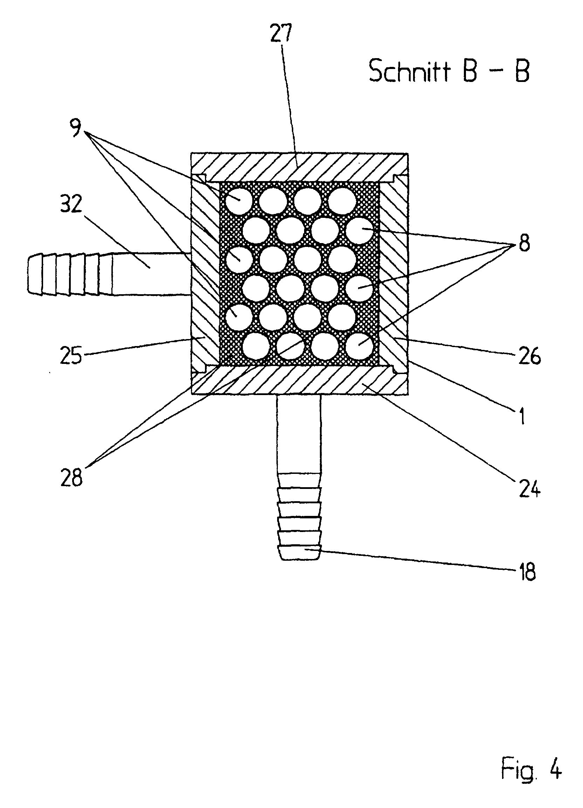

Der Querschnitt B-B durch den Membranmodul gemäß Figur 3 im Bereich der Trennvorrichtung 28 ist vergrößert in Figur 4 dargestellt. In das Gehäusemittelteil, bestehend aus Boden 24 und Seitenteilen 25,26, sind wiederum - wie in Figur 2 dargestellt, zwei Gruppen von Hohlfasermembranen 8,9 lagenweise in alternierender Abfolge so eingeschichtet, daß der Querschnitt des Gehäusemittelteils ausgefüllt ist, wobei die einzelnen Lagen entweder nur Hohlfasermembranen 8 der ersten Gruppe oder nur Hohlfasermembranen 9 der zweiten Gruppe enthalten. An seiner Oberseite ist das Gehäusemittelteil mittels der Abdeckvorrichtung 27 verschlossen. Die Trennvorrichtung 28 erstreckt sich im Außenraum um die Hohlfasermembranen über den gesamten Querschnitt des Gehäusemittelteils und umhüllt die einzelnen Hohlfasermembranen 8,9.

Eine solche Trennvorrichtung 28 läßt sich problemlos beim lagenweisen Einlegen der Hohlfasermembranen 8,9 in das Gehäusemittelteil 1 aufbauen, indem zunächst ein Streifen z.B. eines geeigneten Epoxidharzes auf den Boden 24 des Gehäusemittelteils 1 eingestreichen wird, in den dann die erste Hohlfasermembranlage eingelegt wird. An die gleiche Stelle wird anschließend ein weiterer Streifen des Harzes aufgetragen, der sich mit dem ersten Streifen verbindet und die Hohlfasermembranen der ersten Lage so umhüllt. Nach jedem Einlegen einer Lage von Hohlfasermembranen wird ein weiterer Harzstreifen an der gleichen Stelle entlang der Längserstreckung des Gehäusemittelteils 1 eingelegt, in den wiederum die darauffolgende Lage von Hohlfasermembranen eingelegt wird. Auf die letzte Hohlfasermembranlage wird ebenfalls ein Harzstreifen aufgelegt, der für eine Abdichtung gegenüber der Abdeckvorrichtung 27 sorgt. Auf diese Weise wird eine fluiddichte Unterteilung des Außenraums um die Hohlfasermembranen 8,9 längs der Längserstreckung in zwei Kammern erreicht. Die in Blickrichtung hinter der Abtrennvorrichtung 28, d.h. hinter der Zeichenebene liegende Kammer weist dabei eine Einlaßeinrichtung 18 und eine Auslaßeinrichtung 32 auf, über die sie mit einem Fluid beschickt werden kann. Entsprechendes gilt für die diesseits der Abtrennvorrichtung 28 liegende Kammer.

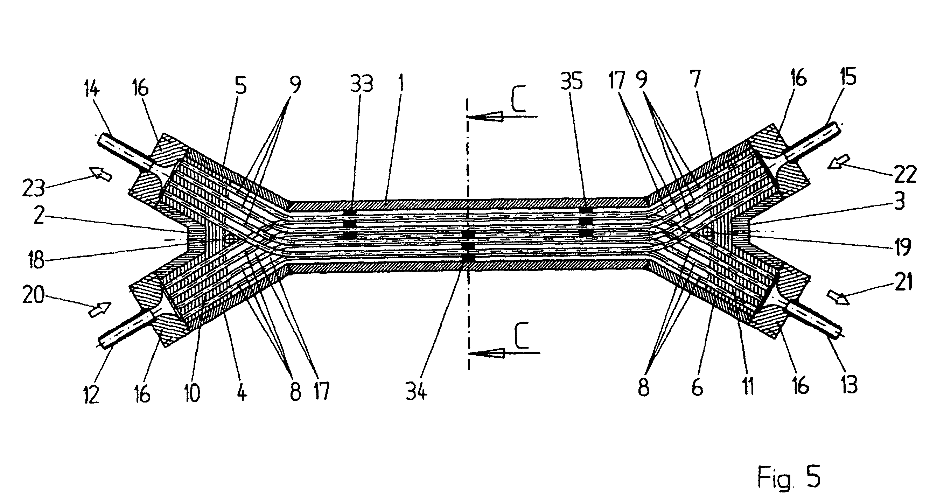

In Figur 5 ist ebenfalls ein Membranmodul dargestellt, der in seinem Aufbau mit dem in Figur 1 gezeigten Modul übereinstimmt, jedoch im Gehäusemittelteil 1 entlang der Längserstreckung des Gehäusemittelteils 1 mehrere Trennvorrichtungen 33,34,35 aufweist, die jeweils den Querschnitt des Gehäusemittelteils 1 um die Hohlfasermembranen über einen Teil der Breite des Gehäusemittelteils 1 ausfüllen. Durch diese Abtrennvorrichtungen 33,34,35 wird ein Fluidstrom, der über die Einlaßeinrichtung 18 in den Außenraum 17 um die Hohlfasermembranen eingeleitet und über die Auslaßeinrichtung 19 aus diesem ausgeleitet wird, beim Durchströmen des Außenraums 17 mehrfach umgelenkt und durch die dabei in Teilbereichen des Außenraums 17 entstehende Queranströmung der Hohlfasermembranen der Stoffaustausch an der Außenseite der Hohlfasermembranen verbessert.

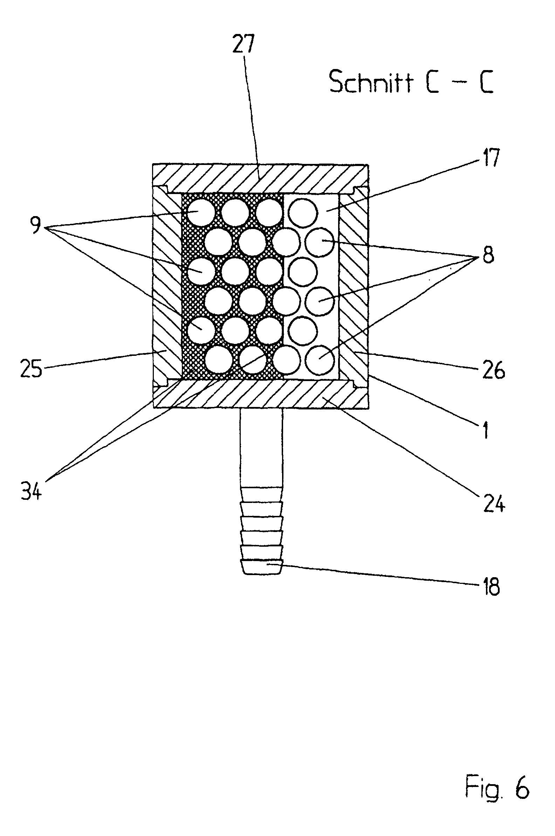

Figur 6 zeigt vergrößert den Querschnitt des Membranmoduls gemäß Figur 5 an der Stelle C-C. Der Aufbau ist mit demjenigen in Figur 2 gezeigten identisch, jedoch ist der Außenraum 17 um die Hohlfasermembranen 8,9 über einen Teil der Breite des Gehäusemittelteils 1 von der Trennvorrichtung 34 eingenommen. Das über die Einlaßeinrichtung 18 in den Außenraum eingeleitete Fluid kann an der Trennvorrichtung 34 nur durch den an dieser Stelle freien Außenraum 17 um die Hohlfasermembranen strömen, wodurch es in Strömungsrichtung vor und hinter der Trennvorrichtung 34 zu Umlenkungen der Fluidstromes kommt.

Alternativ kann sich eine solche Abtrennvorrichtung zwar über die gesamte Breite des Gehäusemittelteils, jedoch nur über einen über einen Teil der Höhe erstrecken oder auch über Teile der Querschnittsfläche des Gehäusemittelteils, die sich an beliebiger Position des Querschnitts befinden.

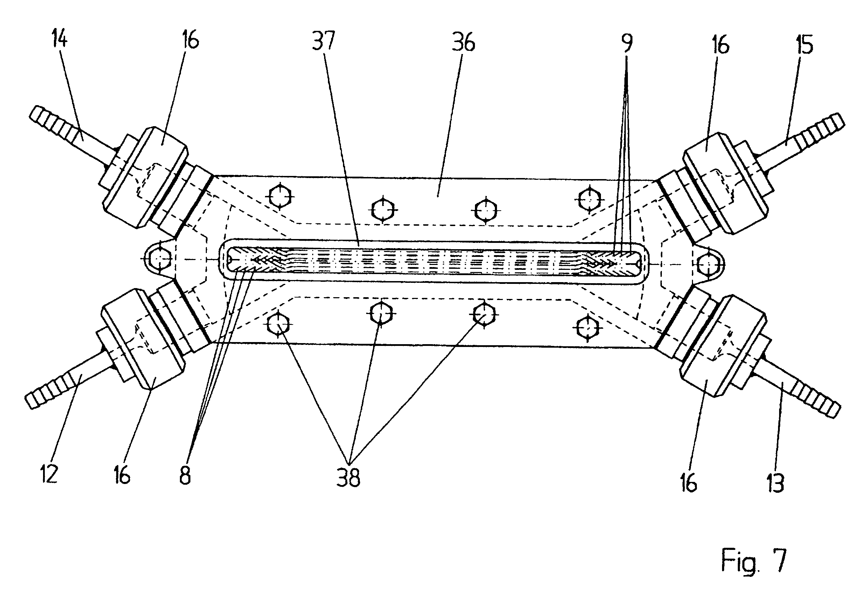

Figur 7 zeigt einen erfindungsgemäßen Membranmodul in der Draufsicht. Der Membranmodul entspricht im wesentlichen dem in Figur 1 gezeigten, und einzelne Teile des Membranmoduls unterhalb der Zeichenebene sind durch gestrichelte Linie skizziert. Der Membranmodul gemäß Figur 7 weist eine abnehmbare Abdeckvorrichtung 36 auf, in die über dem Gehäusemittelteil und Teilen der Endstücke ein Sichtfenster 37 eingelassen ist. Die unter dem Sichtfenster 37 verlaufenden Hohlfasermembranen sind über ihre als strichpunktierte Linien gezeichneten Längsachsen dargestellt. Die Abdeckvorrichtung 36 ist in diesem Fall mittels der Schrauben 38 so mit einer mit dem Boden des Gehäusemittelteils verbundenen - nicht sichtbaren - Platte verschraubt, daß das Gehäusemittelteil sowie die Endstücke an ihrer Oberseite durch die Abdeckvorrichtung 36 fluiddicht verschlossen sind. Eine derartige Abdeckvorrichtung 36 kann beliebig wieder entfernt werden, beispielsweise um die im Gehäusemittelteil und in den Endstücken befindlichen Hohlfasermembranen auszutauschen.

Die erfindungsgemäßen Membranmodule bzw. die nach dem erfindungsgemäßen Verfahren hergestellten Membranmodule können für eine Vielzahl von Anwendungen eingesetzt werden, bei denen verschiedenste - auch teilchenbeladene - Fluide zum Einsatz kommen können. Hierbei kann es sich bei den Fluiden um Gase oder um Flüssigkeiten handeln.

Bevorzugt lassen sich die erfindungsgemäßen Membranmodule in der Flüssigmembrantechnik zur Extraktion einsetzen, wobei im Außenraum die Hohlfasermembranen sich eine als Flüssigmembran wirkende Flüssigkeit befindet, über die z.B. eine zu extrahierende Komponente von den Hohlfasermembranen einer Gruppe zu den Hohlfasermembranen einer zweiten Gruppe transportiert wird. Eine interessante Anwendung hierfür ist z.B. die Trennung von Enantiomeren. Weitere Anwendungen beziehen sich allgemein auf die Extraktionstechnologie oder die Gastrennung sowohl aus gasförmigen als auch aus flüssigen Medien. Auch für Anwendungen im Bereich der Biotechnologie oder der Medizintechnik sind die erfindungsgemäßen Membranmodule hervorragend geeignet. Besonders bevorzugt lassen sie sich bei der Züchtung oder Erhaltung von Zellkultursystemen einsetzen, bei denen verschiedene Stoffströme zu- bzw. abgeführt werden müssen. Beispielsweise kann bei einem erfindungsgemäßen Modul mit drei Gruppen von Hohlfasermembranen eine Zellkultur im Außenraum um die Hohlfasermembranen angesiedelt sein, und über die erste Gruppe von Hohlfasermembranen eine Versorgung mit Sauerstoff erfolgen, über die zweite Gruppe von Hohlfasermembranen eine Nährlösung zugeführt werden und über die dritte Gruppe von Hohlfasermembranen eine Entfernung von Abfallprodukten oder von bestimmten von den Zellen produzierten Stoffen vorgenommen werden. Natürlich kann für eine derartige Anwendung z.B. auch ein Membranmodul eingesetzt werden, der zwei Gruppen von Hohlfasermembranen enthält, wobei eine der Gruppen aus zwei Untergruppen besteht. Daher lassen sich die erfindungsgemäßen Membranmodule besonders auch als künstliche Leber einsetzen. Weitere Anwendungen sind z.B. die Konservierung von Vollblut oder auch die Expansion/Selektion von Stammzellen oder T-Zellen zur Tumortherapie.

Es kann auch eine der Gruppen von Hohlfasermembranen allein für Temperierzwecke, d.h. zum Wärmeaustausch eingesetzt und mit einer hierfür geeigneten Flüssigkeit durchströmt werden und mindestens eine weitere Gruppe von Hohlfasermembranen für den Stoffaustausch. Auch in Prozessen, bei denen sowohl Stoffaustausch- als auch Stofftrennprozesse auftreten, lassen sich die erfindungsgemäßen Membranmodule mit Erfolg verwenden, beispielsweise, wenn eine Oxygenation in Verbindung mit einer Mikrofiltration oder einer Ultrafiltration erforderlich ist. Bei einigen spezifischen Anwendungen können auch im Inneren der Hohlfasermembranen, d.h. in deren Lumina Zellen eingeschlossen sein, die dann über den Außenraum um die Hohlfasermembranen versorgt werden. In diesen Fällen werden die betreffenden Hohlfasermembranen zunächst mit den entsprechenden Zellsuspensionen beschickt und anschließend verschlossen.

Die erfindungsgemäßen Membranmodule lassen sich auch vorteilhaft für stoffspezifische Behandlungen von Fluiden einsetzen. Unter stoffspezifischen Behandlungen von Fluiden werden hier Behandlungen verstanden, bei denen das zu behandelnde Fluid, welches bestimmte Stoffe oder Zielsubstanzen enthält, mit einem Trägermaterial in Kontakt gebracht wird, auf und/oder in dem funktionelle Gruppen oder Substanzen immobilisiert sind, die in spezifischer, selektiver Weise mit der oder den in dem Fluid enthaltenen Zielsubstanzen, d.h. der Substanz, auf die die stoffspezifische Behandlung ausgerichtet ist, wechselwirken. Solche Wechselwirkungen können beispielsweise Kationen- oder Anionenaustausch, Hydrophil-Hydrophob-Wechselwirkung, Wasserstoffbrückenbildung, Affinität oder enzymatische oder katalytische Reaktionen und dergleichen sein. Bei der affinen Stofftrennung, wie z.B. der Affinitätschromatographie, sind an das Trägermaterial Liganden gekoppelt oder im Trägermaterial immobilisiert, die die Funktion haben, eine einzelne Zielsubstanz oder auch eine ganze Klasse von Substanzen adsorptiv spezifisch zu binden. Diese Zielsubstanz wird als Ligat bezeichnet. Ein Beispiel für klassenspezifische Liganden sind positiv geladene Diethylaminoethyl(DEAE)-Gruppen oder negativ geladene Sulfonsäure(SO₃)-Gruppen, die die Klasse der positiv geladenen bzw. negativ geladenen Moleküle adsorbieren. Spezifische Liganden sind z.B. Antikörper gegen ein bestimmtes Protein, das als Ligat an den Antikörper gebunden wird.

Ein weiteres Beispiel für eine stoffspezifische Behandlung ist die Gewinnung von Wirkstoffen aus Zellsuspensionen, in denen genmodifizierte Zellen Stoffe wie Antikörper, Hormone, Wachstumsfaktoren oder Enzyme in meist kleinen Konzentrationen produziert haben. Eine wichtige Anwendung ist auch die extrakorporaie Entfernung von unerwünschten Substanzen aus dem menschlichen Blutplasma sowie die Gewinnung von Komponenten wie z.B. Immunglobulinen oder Gerinnungsfaktoren aus gespendetem Blutplasma. Schließlich ist eine breite Anwendung auch die katalytische oder biokatalytische - enzymatische - Behandlung von Flüssigkeiten wie z.B. die Hydrolyse von Ölen durch Lipasen, die an einer Matrix immobilisiert sind.

Besonders bevorzugte stoffspezifische Behandlungsverfahren sind Verfahren zur Reinigung/Trennung von Ligaten aus einer ligathaltigen Flüssigkeit, wobei im erfindungsgemäßen Membranmodul Hohlfasermembranen enthalten sind, auf und/oder in denen Liganden für besagte Ligaten immobilisiert sind, oder auch im Außenraum um die Hohlfasermembranen derartige Liganden vorliegen. Desweiteren sind bevorzugte Verfahren solche zur katalytischen Behandlung von Flüssigkeiten, wobei im erfindungsgemäßen Membranmodul Hohlfasermembranen enthalten sind, auf und/oder in denen Katalysatoren immobilisiert sind oder im Außenraum um die Hohlfasermembranen solche Katalysatoren enthalten sind. Zu den katalytischen Verfahren zählen auch biokatalytische Verfahren wie z.B. enzymatische Verfahren. Hinsichtlich einsetzbarer Liganden und Katalysatoren, hinsichtlich der Möglichkeiten ihrer Immobilisierung sowie verschiedener stoffspezifischer Behandlungen sei beispielsweise auf die Ausführungen in der EP-A-787523 verwiesen, auf deren Offenbarung sich hier ausdrücklich bezogen wird.

Natürlich lassen sich die erfindungsgemäßen Membranmodule auch für stoffspezifische Behandlungsverfahren einsetzen, bei denen sich ein Trägermaterial, auf und/oder in dem die funktionellen Gruppen oder Substanzen immobilisiert sind, im Außenraum um die Hohlfasermembranen befindet. Auch für Verfahren, bei denen mehrere verschiedene stoffspezifische Behandlungen durchzuführen sind, lassen sich die erfindungsgemäßen Module hervorragend einsetzen, wenn auf und /oder in den Hohlfasermembranen unterschiedlicher Gruppen und gegebenenfalls im Außenraum verschiedene auf die unterschiedlichen Behandlungen ausgerichtete funktionelle Gruppen immobilisiert sind.

## Patentansprüche

1. Verfahren zur Herstellung eines Membranmoduls mit einem Gehäusemittelteil (1), enthaltend mindestens zwei in schichtförmigen Lagen angeordnete und getrennt beschickbare Gruppen von Hohlfasermembranen (8,9), wobei die Hohlfasermembranen innerhalb einer Gruppe sowie die Hohlfasermembranen unterschiedlicher Gruppen zumindest im Gehäusemittelteil (1) zueinander im wesentlichen parallel angeordnet sind und wobei jede Lage nur Hohlfasermembranen einer einzigen Gruppe enthält, welches Verfahren mindestens die folgenden Schritte umfaßt:
a) Auswahl eines rinnenförmigen, an seiner Oberseite offenen Gehäusemittelteils (1), welches an seinen Enden in ebenfalls an ihrer Oberseite offene Endstücke (2,3) mit jeweils einer der Anzahl der Gruppen von Hohlfasermembranen entsprechenden Anzahl von Armen (4,5,6,7) mündet, wobei das Gehäusemittelteil (1) und die Endstücke (2,3) zusammen eine Gehäuseschale ausbilden,
b) Einlegen der mindestens zwei Gruppen von Hohlfasermembranen (8,9) jeweils in Form von schichtförmigen Lagen übereinander derart in das Gehäusemittelteil (1) und in die Endstücke (2,3), daß die Hohlfasermembranen (8,9) im wesentlichen in Richtung der Längserstreckung des Gehäusemittelteils (1) und im wesentlichen parallel zueinander liegen und in den Armen (4,5,6,7) der Endstücke (2,3) enden, wobei die Enden unterschiedlicher Gruppen von Hohlfasermembranen (8,9) in jeweils unterschiedlichen Armen (4,5,6,7) der jeweiligen Endstücke (2,3) angeordnet werden,
c) Verschließen des Gehäusemittelteils (1) und der Endstükke (2,3) mit einer Abdeckvorrichtung (27,36),
d) Einbetten der Enden der Hohlfasermembranen (8,9) zumindest in den Armen (4,5,6,7) der Endstücke (2,3) mit einer Vergußmasse (10,11) in der Weise, daß die Hohlfasermembranen mit mindestens dem einen ihrer Enden durch die Vergußmasse (10,11) hindurchtreten und an diesem Ende geöffnet sind und daß zwischen den Hohlfasermembranen (8,9), der Innenwand des Gehäusemittelteils (1), der dem Gehäusemittelteil (1) zugewandten Innenseite der Abdeckvorrichtung (27,36) und den Vergußmassen (10,11) ein Außenraum (17) um die Hohlfasermembranen (8,9) ausgebildet wird.

2. Verfahren nach Anspruch 1, **dadurch gekennzeichnet, daß** die Abdeckvorrichtung (27,36) ebenfalls als Gehäuseschale ausgeführt ist, in die ebenfalls die mindestens zwei Gruppen von Hohlfasermembranen (8,9) eingelegt werden.

3. Verfahren nach einem oder mehreren der Ansprüche 1 oder 2, **dadurch gekennzeichnet, daß** ein Gehäusemittelteil (1) mit einem rechteckigen oder quadratischen Innenquerschnitt ausgewählt wird.

4. Verfahren nach einem oder mehreren der Ansprüche 1 oder 2, **dadurch gekennzeichnet, daß** ein Gehäusemittelteil (1) mit einem teilkreisförmigen Innenquerschnitt ausgewählt wird.

5. Verfahren nach einem oder mehreren der Ansprüche 1 bis 4, **dadurch gekennzeichnet, daß** mindestens eine Gruppe von Hohlfasermembranen (8,9) aus zwei Untergruppen von Hohlfasermembranen besteht, wobei innerhalb jeweils einer schichtförmigen Lage nur Hohlfasermembranen einer einzelnen Untergruppe angeordnet werden.

6. Verfahren nach Anspruch 5, **dadurch gekennzeichnet, daß** die Hohlfasermembranen dieser mindestens einen Gruppe so eingebettet sind, daß sie nur an ihrem einen Ende geöffnet sind und die Endstücke (2,3), in denen die geöffneten Enden von Hohlfasermembranen unterschiedlicher Untergruppen eingebettet sind, sich an entgegengesetzten Enden des Gehäusemittelteils (1) befinden.

7. Verfahren nach einem oder mehreren der Ansprüche 1 bis 5, **dadurch gekennzeichnet, daß** die Hohlfasermembranen der Gruppen so eingebettet werden, daß sie mit ihren beiden Enden durch die Vergußmasse (10,11) hindurchtreten und sie an ihren beiden Enden geöffnet sind,

8. Verfahren nach einem oder mehreren der Ansprüche 1 bis 5, **dadurch gekennzeichnet, daß** die Hohlfasermembranen so eingebettet werden, daß die Hohlfasermembranen mindestens einer Gruppe an ihrem einen Ende verschlossen und an ihrem anderen Ende geöffnet sind.

9. Verfahren nach einem oder mehreren der Ansprüche 1 bis 8, **dadurch gekennzeichnet, daß** ein Membranmodul hergestellt wird, der zwei in schichtförmigen Lagen angeordnete und getrennt beschickbare Gruppen von Hohlfasermembranen (8,9) enthält.

10. Verfahren nach einem oder mehreren der Ansprüche 1 bis 9, **dadurch gekennzeichnet, daß** die Hohlfasermembranen (8,9) der einzelnen Gruppen vor Einlegen in das Gehäusemittelteil (1) jeweils in Hohlfasermatten eingebunden werden.

11. Verfahren nach Anspruch 10, **dadurch gekennzeichnet, daß** die Hohlfasermembranen (8,9) mittels textiler Fäden in die jeweilige Hohlfasermatte eingebunden werden.

12. Verfahren nach einem oder mehreren der Ansprüche 10 oder 11, **dadurch gekennzeichnet, daß** die Hohlfasermatten in Webmatten eingebunden werden.

13. Verfahren nach einem oder mehreren der Ansprüche 10 oder 11, **dadurch gekennzeichnet, daß** die Hohlfasermatten in Wirkmatten eingebunden werden.

14. Verfahren nach einem oder mehreren der Ansprüche 10 bis 13, **dadurch gekennzeichnet, daß** Hohlfasermatten als Lagen übereinandergestapelt werden.

15. Verfahren nach einem oder mehreren der Ansprüche 1 bis 14, **dadurch gekennzeichnet, daß** die Gruppen von Hohlfasermembranen (8,9) so in das Gehäusemittelteil (1) eingebracht werden, daß eine alternierende Abfolge von Lagen der verschiedenen Gruppen von Hohlfasermembranen (8,9) erhalten wird.

16. Verfahren nach einem oder mehreren der Ansprüche 10 bis 13, **dadurch gekennzeichnet, daß** mindestens eine Anordnung aus aufeinandergelegten Hohlfasermatten mit je einer Hohlfasermatte einer jeden Gruppe von Hohlfasermembranen (8,9) aufeinandergelegt wird, anschließend parallel zu den Hohlfasermembranen zick-zack-förmig zu einem Stapel gefaltet wird und der so erhaltene Stapel in das Gehäusemittelteil (1) eingelegt wird und die Hohlfasermembranen (8,9) unterschiedlicher Gruppen in unterschiedliche Arme (4,5,6,7) der jeweiligen Endstücke (2,3) eingebracht werden, wobei die Hohlfasermatten zuvor an ihren Enden nach Gruppen voneinander getrennt wurden.

17. Verfahren nach einem oder mehreren der Ansprüche 1 bis 16, **dadurch gekennzeichnet, daß** die Hohlfasermembranen (8,9) benachbarter Lagen durch Abstandshalter zueinander beabstandet werden.

18. Verfahren nach einem oder mehreren der Ansprüche 1 bis 17, **dadurch gekennzeichnet, daß** in den Außenraum (17) um die Hohlfasermembranen (8,9) entlang der Längserstreckung des Gehäusemittelteils (1) zu dieser Längserstreckung im wesentlichen quer verlaufende Trennvorrichtungen (28,33,34,35) eingebracht werden.

19. Verfahren zum Auswechseln der Hohlfasermembranen (8,9) bei einem mindestens zwei in schichtförmigen Lagen angeordnete und getrennt beschickbare Gruppen von Hohlfasermembranen (8,9) enthaltenden Membranmodul, bei dem die Hohlfasermembranen innerhalb einer Gruppe sowie die Hohlfasermembranen unterschiedlicher Gruppen zueinander im wesentlichen parallel angeordnet sind und wobei jede Lage nur Hohlfasermembranen einer einzigen Gruppe enthält, wobei
a) bei der Herstellung des Moduls ein Gehäuse mit abnehmbarer Abdeckvorrichtung (36) ausgewählt wird,
b) vor dem Auswechseln die Abdeckvorrichtung (36) entfernt wird,
c) die im Gehäuse enthaltenen Hohlfasermembranen (8,9) zusammen mit den Einbettungen (10,11) an den Enden der Hohlfasermembranen (8,9) aus dem Gehäuse entnommen werden und
d) anschließend ein Verfahren gemäß Anspruch 1 durchgeführt wird.

20. Membranmodul mit einem Modulgehäuse, umfassend ein Gehäusemittelteil (1) mit einer Längserstreckung, welches an seinen Enden in Endstücke (2,3) mit jeweils mindestens zwei Armen (4,5,6,7) mündet, wobei in dem Modulgehäuse mindestens zwei Gruppen von getrennt beschickbaren Hohlfasermembranen (8,9) jeweils in schichtförmigen Lagen derart angeordnet sind, daß jede Lage nur Hohlfasermembranen einer einzigen Gruppe enthält, daß die Hohlfasermembranen (8,9) im wesentlichen in Richtung der Längserstreckung des Gehäusemittelteils (1) und zueinander im wesentlichen parallel angeordnet sind und die Enden der Hohlfasermembranen (8,9) in den Armen (4,5,6,7) der Endstücke (2,3) enden, wobei die Enden der Gruppen von Hohlfasermembranen (8,9) jeweils separat in unterschiedlichen Armen (4,5,6,7) der Endstücke (2,3) angeordnet sind und die Hohlfasermembranen (8,9) zumindest in den Armen (4,5,6,7) der Endstücke (2,3) mit einer Vergußmasse (10,11) so eingebettet sind, daß sie mit mindestens dem einen ihrer Enden durch die Vergußmasse (10,11) hindurchtreten und an diesem Ende geöffnet sind und wobei die geöffneten Enden der Hohlfasermembranen (8,9) nach Gruppen getrennt jeweils mit einer Einlaßeinrichtung (12,15) oder mit einer Auslaßeinrichtung (13,14) in Verbindung stehen, wobei zwischen den Hohlfasermembranen (8,9), der Innenwand des Gehäusemittelteils (1), der dem Gehäusemittelteil zugewandten Innenseite der Abdeckvorrichtung (27,36) und den Vergußmassen (10,11) ein Außenraum (17) um die Hohlfasermembranen (8,9) ausgebildet ist **dadurch gekennzeichnet, daß** das Gehäusemittelteil (1) und die Endstücke (2,3) mit ihren Armen (4,5,6,7) in Form von an ihrer Oberseite offenen Rinnen ausgebildet sind und zusammen eine Gehäuseschale ausbilden, und daß das Gehäusemittelteil (1) sowie die Endstücke (2,3) an ihren Oberseiten mit einer Abdeckvorrichtung (27,36) fluiddicht verschlossen sind.

21. Membranmodul nach Anspruch 20, **dadurch gekennzeichnet, daß** die Abdeckvorrichtung (27,36) ebenfalls als Gehäuseschale ausgeführt ist und in dieser ebenfalls schichtförmige Lagen der Gruppen von Hohlfasermembranen (8,9) angeordnet sind.

22. Membranmodul nach einem oder mehreren der Ansprüche 20 oder 21, **dadurch gekennzeichnet, daß** das Gehäusemittelteil (1) einen rechteckigen oder quadratischen Innenquerschnitt aufweist.

23. Membranmodul nach einem oder mehreren der Ansprüche 20 oder 21, **dadurch gekennzeichnet, daß** das Gehäusemittelteil (1) einen teilkreisförmigen Innenquerschnitt aufweist.

24. Membranmodul nach einem oder mehreren der Ansprüche 20 bis 23, **dadurch gekennzeichnet, daß** die Abdeckvorrichtung (27,36) abnehmbar ausgeführt ist.

25. Membranmodul nach einem oder mehreren der Ansprüche 20 bis 24, **dadurch gekennzeichnet, daß** mindestens eine Gruppe von Hohlfasermembranen (8,9) aus mindestens zwei in schichtförmigen Lagen angeordneten Untergruppen von Hohlfasermembranen besteht.

26. Membranmodul nach Anspruch 25, **dadurch gekennzeichnet, daß** innerhalb jeweils einer schichtförmigen Lage nur Hohlfasermembranen einer einzigen Untergruppe enthalten sind und die Hohlfasermembranen dieser mindestens einen Gruppe so eingebettet sind, daß sie nur an ihrem einen Ende geöffnet sind und die Endstücke (2,3), in denen die geöffneten Enden von Hohlfasermembranen unterschiedlicher Untergruppen eingebettet sind, sich an entgegengesetzten Enden des Gehäusemittelteils (1) befinden.

27. Membranmodul nach einem oder mehreren der Ansprüche 20 bis 25, **dadurch gekennzeichnet, daß** die Hohlfasermembranen so eingebettet sind, daß jeweils ihre beiden Enden durch die Vergußmasse (10,11) hindurchtreten und geöffnet sind, wobei die Hohlfasermembranen (8,9) nach Gruppen getrennt mit jeweils ihrem einen geöffneten Ende mit einer Einlaßeinrichtung (12,15) und mit ihrem anderen geöffneten Ende mit einer Auslaßeinrichtung (13,14) in Verbindung stehen.

28. Membranmodul nach einem oder mehreren der Ansprüche 20 bis 25, **dadurch gekennzeichnet, daß** die Hohlfasermembranen so eingebettet werden, daß die Hohlfasermembranen mindestens einer Gruppe an ihrem einen Ende verschlossen und an ihrem anderen Ende geöffnet sind.

29. Membranmodul nach einem oder mehreren der Ansprüche 20 bis 28, **dadurch gekennzeichnet, daß** im Membranmodul zwei Gruppen von Hohlfasermembranen (8,9) angeordnet sind.

30. Membranmodul nach einem oder mehreren der Ansprüche 20 bis 29, **dadurch gekennzeichnet, daß** er im Außenraum (17) um die Hohlfasermembranen (8,9) entlang der Längserstreckung des Gehäusemittelteils (1) mindestens eine zu dieser Längserstreckung im wesentlichen quer verlaufende Trennvorrichtung (28,33,34,35) aufweist.

31. Membranmodul nach Anspruch 30, **dadurch gekennzeichnet, daß** die mindestens eine Trennvorrichtung (28) den Außenraum in zumindest im wesentlichen fluiddicht voneinander getrennte Kammern (29,30) unterteilt.

32. Membranmodul nach Anspruch 31, **dadurch gekennzeichnet, daß** mindestens eine der Kammern (29,30) zumindest eine Einlaßeinrichtung (18,31) aufweist.

33. Membranmodul nach Anspruch 30, **dadurch gekennzeichnet, daß** sich die mindestens eine Trennvorrichtung (33,34,35) über einen Teil der Querschnittsfläche des Gehäusemittelteils (1) erstreckt.

34. Membranmodul nach einem oder mehreren der Ansprüche 20 bis 33, **dadurch gekennzeichnet, daß** er eine alternierende Abfolge von Lagen der verschiedenen Gruppen von Hohlfasermembranen (8,9) enthält.

35. Membranmodul nach einem oder mehreren der Ansprüche 20 bis 34, **dadurch gekennzeichnet, daß** die Hohlfasermembranen (8,9) der einzelnen Gruppen jeweils in Hohlfasermatten eingebunden sind.

36. Membranmodul nach Anspruch 35, **dadurch gekennzeichnet, daß** die Hohlfasermembranen (8,9) mittels textiler Fäden in die jeweilige Hohlfasermatte eingebunden sind.

37. Membranmodul nach einem oder mehreren der Ansprüche 35 oder 36, **dadurch gekennzeichnet, daß** Hohlfasermatten als Lagen aufeinandergestapelt sind.

38. Verwendung des Membranmoduls nach einem oder mehreren der Ansprüche 20 bis 37 zur Trennung von Enantiomeren.

39. Verwendung des Membranmoduls nach einem oder mehreren der Ansprüche 20 bis 37 zur Züchtung oder Erhaltung von Zellkultursystemen.

40. Verwendung des Membranmoduls nach einem oder mehreren der Ansprüche 20 bis 37 zur stoffspezifischen Behandlung von Fluiden.

## Claims

1. Process for manufacturing a membrane module with a housing middle section (1), containing at least two groups of hollow-fiber membranes (8,9), the groups arranged in layers and capable of being fed independently by fluids, wherein the hollow-fiber membranes within one group and the hollow-fiber membranes of different groups, at least in the housing middle section (1), are arranged substantially parallel to each other and each layer contains only hollow-fiber membranes of a single group, the process comprising at least the following steps:
a) selecting a channel-shaped housing middle section (1) that is open at the top and the ends of which terminate in end pieces (2,3), also open at the top and each with a number of arms (4,5,6,7) corresponding to the number of groups of hollow-fiber membranes, where the housing middle section (1) and the end pieces (2,3) together form a housing shell,
b) inserting the at least two groups of hollow-fiber membranes (8,9) into the housing middle section (1) and the end pieces (2,3), in each case in the form of layers superimposed such that the hollow-fiber membranes (8,9) lie substantially in the direction of the longitudinal extent of the housing middle section (1) and substantially parallel to each other, and terminate in the arms (4,5,6,7) of the end pieces (2,3), whereby the ends of different groups of hollow-fiber membranes (8,9) are arranged in respectively different arms (4,5,6,7) of the respective end pieces (2,3),
c) closing the housing middle section (1) and the end pieces (2,3) with a covering device (27,36),
d) embedding the ends of the hollow-fiber membranes (8,9) at least in the arms (4,5,6,7) of the end pieces (2,3) with a sealing compound (10,11) in such a manner that the hollow-fiber membranes penetrate the sealing compound (10,11) with at least one of their ends and are open at this end, and that a space (17) enclosing the hollow-fiber membranes (8,9) is formed between the hollow-fiber membranes (8,9), the inner wall of the housing middle section (1), the inside of the covering device (27,36) facing the housing middle section (1), and the sealing compound (10,11).

2. Process according to Claim 1, **characterized in that** the covering device (27,36) is likewise in the form of a housing shell, into which the at least two groups of hollow-fiber membranes (8,9) are likewise inserted.

3. Process according to one or more of Claims 1 or 2, **characterized in that** a housing middle section (1) with a rectangular or square inside cross-section is selected.

4. Process according to one or more of Claims 1 or 2, **characterized in that** a housing middle section (1) with a sector-shaped inside cross-section is selected.

5. Process according to one or more of Claims 1 to 4, **characterized in that** at least one group of hollow-fiber membranes (8,9) consists of two subgroups of hollow-fiber membranes, whereby only hollow-fiber membranes of a single subgroup are arranged within each respective layer.

6. Process according to Claim 5, **characterized in that** the hollow-fiber membranes of this at least one group are embedded such that they are open on only one end and the end pieces (2,3) in which the open ends of hollow-fiber membranes of different subgroups are embedded are located at opposite ends of the housing middle section (1).

7. Process according to one or more of Claims 1 to 5, **characterized in that** the hollow fiber membranes of the groups are embedded such that both of their ends penetrate the sealing compound (10,11) and are open at both ends.

8. Process according to one or more of Claims 1 to 5, **characterized in that** the hollow-fiber membranes are embedded such that the hollow-fiber membranes of at least one group are closed at one end and open at the other end.

9. Process according to one or more of Claims 1 to 8, **characterized in that** a membrane module is manufactured that contains at least two groups of hollow-fiber membranes (8,9), arranged in layers and capable of being fed independently by fluids.

10. Process according to one or more of Claims 1 to 9, **characterized in that** the hollow-fiber membranes (8,9) of the individual groups are each incorporated into hollow-fiber mats prior to insertion into the housing middle section (1).

11. Process according to Claim 10, **characterized in that** the hollow-fiber membranes (8,9) are incorporated into the respective hollow-fiber mat using textile threads.

12. Process according to one or more of Claims 10 or 11, **characterized in that** the hollow-fiber mats are incorporated into woven mats.

13. Process according to one or more of Claims 10 or 11, **characterized in that** the hollow-fiber mats are incorporated into knitted mats.

14. Process according to one or more of Claims 10 to 13, **characterized in that** hollow-fiber mats are stacked in layers.

15. Process according to one or more of Claims 1 to 14, **characterized in that** the groups of hollow-fiber membranes (8,9) are introduced into the housing middle section (1) such that an alternating sequence of layers of the different groups of hollow-fiber membranes (8,9) is obtained.

16. Process according to one or more of Claims 10 to 13, **characterized in that** at least one arrangement of superimposed hollow-fiber mats, with one hollow-fiber mat for each group of hollow-fiber membranes (8,9), is arranged in superimposition, subsequently folded in a zigzag pattern parallel to the hollow-fiber membranes to form a stack, the stack thus obtained is inserted into the housing middle section (1), and the hollow-fiber membranes (8,9) of different groups are introduced into different arms (4,5,6,7) of the respective end pieces (2,3), whereby the ends of the hollow-fiber mats were previously separated by group.

17. Process according to one or more of Claims 1 to 16, **characterized in that** the hollow-fiber membranes (8,9) of adjacent layers are separated from each other by spacers.

18. Process according to one or more of Claims 1 to 17, **characterized in that** separation devices (28,33,34,35) oriented substantially perpendicular to the longitudinal extent of the housing middle section (1) are arranged along this longitudinal extent in the space (17) enclosing the hollow-fiber membranes (8,9).

19. Process for replacing the hollow-fiber membranes (8,9) in a membrane module containing at least two groups of hollow-fiber membranes (8,9), the groups arranged in layers and capable of being fed independently by fluids, in which module the hollow-fiber membranes within one group as well as the hollow-fiber membranes of different groups are arranged substantially parallel to each other and each layer contains only hollow-fiber membranes of a single group, the process **characterized in that**
a) a housing with a removable covering device (36) is selected when the module is manufactured,
b) the covering device (36) is removed prior to the replacement,
c) the hollow-fiber membranes (8,9) contained in the housing, together with the embedded portions (10,11) at the ends of the hollow-fiber membranes (8,9), are removed from the housing, and
d) a process according to Claim 1 is subsequently conducted.

20. Membrane module with a module housing, comprising a housing middle section (1) with a longitudinal extent, terminating at its ends in end pieces (2,3) each with at least two arms (4,5,6,7), wherein the module housing contains at least two groups of hollow-fiber membranes (8,9), capable of being fed independently by fluids and arranged in layers such that each layer contains only hollow-fiber membranes of a single group, that the hollow-fiber membranes (8,9) are arranged substantially in the direction of the longitudinal extent of the housing middle section (1) and substantially parallel to each other, and the ends of the hollow-fiber membranes (8,9) terminate in the arms (4,5,6,7) of the end pieces (2,3), whereby the ends of the groups of hollow-fiber membranes (8,9) are each arranged separately in different arms (4,5,6,7) of the end pieces (2,3) and the hollow-fiber membranes (8,9), at least in the arms (4,5,6,7) of the end pieces (2,3), are embedded with a sealing compound (10,11) such that they at least at one of their ends penetrate the sealing compound (10,11) and are open at this end, and whereby the open ends of the hollow-fiber membranes (8,9), separated by group, are each in communication with an inlet arrangement (12,15) or an outlet arrangement (13,14), **characterized in that** the housing middle section (1) and the end pieces (2,3) with their arms (4,5,6,7) are designed in the form of channels, open at the top and together constituting a housing shell, and that the housing middle section (1) and end pieces (2,3) are sealed in a fluid-tight manner with a covering device (27,36) and a space (17) enclosing the hollow-fiber membranes (8,9) is thereby formed between the hollow-fiber membranes (8,9), the inner wall of the housing middle section (1), the inside of the covering device (27,36) facing the housing middle section, and the sealing compound (10,11).

21. Membrane module according to Claim 20, **characterized in that** the covering device (27,36) is also in the form of a housing shell, in which layers of the groups of hollow-fiber membranes (8,9) are likewise arranged.

22. Membrane module according to one or more of Claims 20 or 21, **characterized in that** the housing middle section (1) has a rectangular or square inner cross-section.

23. Membrane module according to one or more of Claims 20 or 21, **characterized in that** the housing middle section (1) has a sector-shaped inner cross-section.

24. Membrane module according to one or more of Claims 20 to 23, **characterized in that** the covering device (27,36) is removable.

25. Membrane module according to one or more of Claims 20 to 24, **characterized in that** at least one group of hollow-fiber membranes (8,9) consists of at least two subgroups of hollow-fiber membranes, the groups arranged in layers.

26. Membrane module according to Claim 25, **characterized in that** only hollow-fiber membranes of a single subgroup are contained in each respective layer, the hollow-fiber membranes of this at least one group are embedded such that they are open only at one end, and the end pieces (2,3) in which the open ends of hollow-fiber membranes of different subgroups are embedded are located at opposite ends of the housing middle section (1).

27. Membrane module according to one or more of Claims 20 to 25, **characterized in that** the hollow-fiber membranes are embedded such that each of their ends penetrates the sealing compound (10,11) and is open, and the hollow-fiber membranes (8,9), separated by group, are in communication at one open end with an inlet arrangement (12,15) and at the other open end with an outlet arrangement (13,14).

28. Membrane module according to one or more of Claims 20 to 25, **characterized in that** the hollow-fiber membranes are embedded such that the hollow-fiber membranes of at least one group are closed at one of their ends and open at the other end.

29. Membrane module according to one or more of Claims 20 to 28, **characterized in that** two groups of hollow-fiber membranes (8,9) are arranged in the membrane module.

30. Membrane module according to one or more of Claims 20 to 29, **characterized in that**, in the space (17) enclosing the hollow-fiber membranes (8,9) along the longitudinal extent of the housing middle section (1), the module has at least one separation device (28,33,34,35) oriented substantially perpendicular to this longitudinal extent.

31. Membrane module according to Claim 30, **characterized in that** the at least one separation device (28) divides the enclosing space into separate chambers (29,30) that are separated from each other in an at least substantially fluid-tight manner.

32. Membrane module according to Claim 31, **characterized in that** at least one of the chambers (29,30) has at least an inlet arrangement (18,31).

33. Membrane module according to Claim 30, **characterized in that** at least one separation device (33,34,35) extends over a portion of the cross-section area of the housing middle section (1).

34. Membrane module according to one or more of Claims 20 to 33, **characterized in that** it contains an alternating sequence of layers of different groups of hollow-fiber membranes (8,9).

35. Membrane module according to one or more of Claims 20 to 34, **characterized in that** the hollow-fiber membranes (8,9) of the individual groups are each incorporated into hollow-fiber mats.

36. Membrane module according to Claim 35, **characterized in that** the hollow-fiber membranes (8,9) are incorporated into the respective hollow-fiber mat using textile threads.

37. Membrane module according to one or more of Claims 35 or 36, **characterized in that** hollow-fiber mats are stacked in layers.

38. Use of the membrane module according to one or more of Claims 20 to 37 for separating enantiomers.

39. Use of the membrane module according to one of more of Claims 20 to 37 for breeding or maintaining cell culture systems.

40. Use of the membrane module according to one or more of Claims 20 to 37 for substance-specific treatment of fluids.

## Revendications

1. Procédé de fabrication d'un module à membrane comportant une partie médiane d'enveloppe (1) qui contient au moins deux groupes de membranes à fibres creuses (8, 9) agencés en couches stratifiées et alimentés séparément, les membranes à fibres creuses à l'intérieur d'un groupe ainsi que les membranes à fibres creuses de groupes différents, au moins dans la partie médiane d'enveloppe, étant essentiellement mutuellement parallèles et chaque couche contenant seulement des membranes à fibres creuses d'un même groupe, lequel procédé comporte les étapes suivantes :
a) utilisation d'une partie médiane d'enveloppe (1) en forme de gouttière, ouverte sur le dessus, qui, à ses extrémités, débouche dans des pièces d'extrémité (2, 3) également ouvertes sur le dessus, avec des bras (4, 5, 6, 7) en nombre égal au nombre de groupes de membranes à fibres creuses, la partie médiane d'enveloppe (1) et les pièces d'extrémité (2, 3) formant ensemble une coque,
b) mise en place les uns sur les autres des groupes de membranes à fibres creuses, au nombre d'au moins deux, sous la forme de couches stratifiées, dans la partie médiane d'enveloppe (1) et dans les pièces d'extrémité (2, 3), de manière telle que les membranes à fibres creuses (8, 9) s'étendent essentiellement dans la direction longitudinale de la partie médiane d'enveloppe (1) et essentiellement parallèlement les unes aux autres et se terminent dans les bras (4, 5, 6, 7) des pièces d'extrémité (2, 3), les extrémités de groupes de membranes à fibres creuses (8, 9) différents étant disposées chaque fois dans des bras (4, 5, 6, 7) différents des pièces d'extrémité (2, 3) concernées,
c) fermeture de la partie médiane d'enveloppe (1) et des pièces d'extrémité (2, 3) à l'aide d'un dispositif de fermeture (27, 36),
d) scellage des extrémités des membranes à fibres creuses (8, 9), au moins dans les bras (4, 5, 6, 7) des pièces d'extrémité (2, 3), à l'aide d'une masse moulable (10, 11) de manière telle, que les membranes à fibres creuses (8, 9), à l'une de leurs extrémités au moins, traversent ladite masse moulable (10, 11) et soient ouvertes à cette extrémité, et qu'une chambre extérieure (17) soit formée autour des membranes à fibres creuses (8, 9), entre les membranes à fibres creuses (8, 9), la paroi intérieure de la partie médiane d'enveloppe (1), la face intérieure du dispositif de fermeture (27, 36) tournée vers la partie médiane d'enveloppe (1) et les masses moulables (10, 11).

2. Procédé selon la revendication 1, **caractérisé en ce que** le dispositif de fermeture (27, 36) est également conformé en coque, dans laquelle sont également disposés les au moins deux groupes de membranes à fibres creuses (8, 9).

3. Procédé selon une ou plusieurs des revendications 1 ou 2, **caractérisé en ce qu'**on utilise une partie médiane d'enveloppe (1) qui présente une section transversale intérieure rectangulaire ou carrée.

4. Procédé selon une ou plusieurs des revendications 1 ou 2, **caractérisé en ce qu'**on utilise une partie médiane d'enveloppe (1) qui présente une section transversale intérieure semi-circulaire.

5. Procédé selon une ou plusieurs des revendications 1 à 4, **caractérisé en ce qu'**au moins un groupe de membranes à fibres creuses (8, 9) est formé de deux sous-groupes de membranes à fibres creuses, seules des membranes à fibres creuses d'un même sous-groupe étant disposées chaque fois dans une couche.

6. Procédé selon la revendication 5, **caractérisé en ce que** les membranes à fibres creuses (8, 9) desdits groupes, au nombre d'au moins un, sont scellées de manière telle qu'elles soient ouvertes à une extrémité seulement, et **en ce que** les pièces d'extrémité (2, 3) dans lesquelles les extrémités ouvertes de membranes à fibres creuses de sous-groupes différents sont scellées sont situées en des opposées de la partie médiane d'enveloppe (1).

7. Procédé selon une ou plusieurs des revendications 1 à 5, **caractérisé en ce que** les membranes à fibres creuses des groupes sont scellées de telle sorte que leurs deux extrémités traversent la masse moulable (10, 11) et que lesdites membranes soient ouvertes à leurs deux extrémités.

8. Procédé selon une ou plusieurs des revendications 1 à 5, **caractérisé en ce que** les membranes à fibres creuses sont scellées de telle sorte que les membranes à fibres creuses d'au moins un groupe soient fermées à l'une de leurs extrémités et ouvertes leur autre extrémité.

9. Procédé selon une ou plusieurs des revendications 1 à 8, **caractérisé en ce qu'**on réalise un module à membrane qui contient deux groupes de membranes à fibres creuses (8, 9) disposés en couches stratifiées, pouvant être alimentés séparément.

10. Procédé selon une ou plusieurs des revendications 1 à 9, **caractérisé en ce que** les membranes à fibres creuses (8, 9) des différents groupes, avant leur mise en place dans la partie médiane d'enveloppe (1), sont liées en nappe de fibres creuses.

11. Procédé selon la revendication 10, **caractérisé en ce que** les membranes à fibres creuses (8, 9) sont liées à la nappe de fibres creuses concernée au moyen de fils textiles.

12. Procédé selon la revendication 10 ou 11, **caractérisé en ce que** les nappes de fibres creuses sont liées dans des nappes tissées.

13. Procédé selon la revendication 10 ou 11, **caractérisé en ce que** les nappes de fibres creuses sont liées dans des nappes tricotées.

14. Procédé selon une ou plusieurs des revendications 10 à 13, **caractérisé en ce que** les nappes de fibres creuses sont empilées les unes sur les autres sous forme de couches.

15. Procédé selon une ou plusieurs des revendications 10 à 14, **caractérisé en ce que** les groupes de membranes à fibres creuses (8, 9) sont disposés dans la partie médiane d'enveloppe (1) de manière à former une suite alternée de couches des différents groupes de membranes à fibres creuses (8, 9)

16. Procédé selon une ou plusieurs des revendications 10 à 13, **caractérisé en ce qu'**on place l'un sur l'autre, au moins un agencement de nappes de fibres creuses empilées de chaque groupe de membranes à fibres creuses (8, 9), on les plie en accordéon parallèlement aux membranes à fibres creuses pour former une pile et on place la pile ainsi formée dans la partie médiane d'enveloppe (1), puis on place les membranes à fibres creuses (8, 9) appartenant à des groupes différents dans des bras (4, 5, 6, 7) différents des pièces d'extrémité (2, 3) concernées, les nappes de fibres creuses ayant été préalablement séparées par groupes au niveau de leurs extrémités.

17. Procédé selon une ou plusieurs des revendications 1 à 16, **caractérisé en ce qu'**on écarte les membranes à fibres creuses (8, 9) de couches voisines à l'aide d'entretoises.

18. Procédé selon une ou plusieurs des revendications 1 à 17, **caractérisé en ce que** dans la chambre extérieure autour des membranes à fibres creuses (8, 9), sur la longueur de la partie médiane d'enveloppe (1), on place des dispositifs de séparation (28, 33, 34, 35) qui s'étendent essentiellement transversalement à la direction longitudinale de ladite partie médiane d'enveloppe (1).

19. Procédé pour le remplacement des membranes à fibres creuses (8, 9) dans un module à membranes comportant au moins deux groupes de membranes à fibres creuses (8, 9) disposés en couches stratifiées, qui peuvent être alimentés séparément, dans lequel les membranes à fibres creuses à l'intérieur d'un groupe ainsi que les membranes à fibres creuses de groupes différents sont essentiellement mutuellement parallèles, chaque couche comportant seulement des membranes à fibres creuses d'un même groupe,
a) lors de la fabrication du module, on choisit une enveloppe avec un dispositif de fermeture (36) amovible,
b) avant de procéder au remplacement, on retire le dispositif de fermeture (36),
c) on retire de l'enveloppe les membranes à fibres creuses (8, 9) avec les masses de scellement (10, 11) aux extrémités desdites membranes à fibres creuses (8, 9) et,
d) on applique un procédé selon la revendication 1,

20. Module à membrane comportant une enveloppe avec une partie médiane d'enveloppe (1) allongée, qui, au niveau de ses extrémités débouche dans des pièces d'extrémité (2, 3) pourvues chacune d'au moins deux bras (4, 5, 6, 7), dans lequel au moins deux groupes de membranes à fibres creuses (8, 9) alimentés séparément sont disposés en couches stratifiées dans l'enveloppe de telle sorte, que chaque couche contienne seulement des membranes à fibres creuses d'un même groupe, que les membranes à fibres creuses (8, 9) soient disposées essentiellement dans la direction longitudinale de la partie médiane d'enveloppe (1) en étant essentiellement mutuellement parallèles et que les extrémités des membranes à fibres creuses (8, 9) se terminent dans les bras (4, 5, 6, 7) des pièces d'extrémité (2, 3), dans lequel les extrémités des groupes de membranes à fibres creuses (8, 9) sont disposées dans des bras (4, 5, 6, 7) différents des pièces d'extrémité (2, 3) et les membranes à fibres creuses (8, 9), au moins dans les bras (4, 5, 6, 7) des pièces d'extrémité (2, 3) sont scellées au moyen d'une masse moulable (10 ,11) de telle sorte qu'elles traversent la masse moulable au niveau de l'une de leurs extrémités et soient ouvertes à cette extrémité, dans lequel les extrémités ouvertes des membranes à fibres creuses (8, 9) séparées en groupes communiquent avec selon le cas un dispositif d'entrée (12, 15) ou avec un dispositif de sortie (13, 14), et dans lequel une chambre extérieure (17) est formée autour des membranes à fibres creuses (8, 9) entre les membranes à fibres creuses (8, 9), la paroi intérieure de la partie médiane d'enveloppe (1), la face intérieure du dispositif de fermeture (27, 36) tournée vers la partie médiane d'enveloppe (1) et les masses moulables (10 ,11), **caractérisé en ce que** la partie médiane d'enveloppe (1) et les pièces d'extrémité (2, 3) avec leurs bras (4, 5, 6, 7) sont conformées en gouttières ouvertes sur le dessus et forment ensemble une coque d'enveloppe, et **en ce que** la partie médiane d'enveloppe (1) et les pièces d'extrémité (2, 3) dans leur partie supérieure sont fermées de manière étanche au fluide par un dispositif de fermeture (27, 36).

21. Module à membrane selon la revendication 20, **caractérisé en ce que** le dispositif de fermeture (27, 36) est également conformé en coque d'enveloppe et que des couches stratifiées des groupes de membranes à fibres creuses (8, 9) sont également disposées dans celle-ci.

22. Module à membrane selon une ou plusieurs des revendications 20 ou 21, **caractérisé en ce que** la partie médiane d'enveloppe (1) a une section transversale intérieure rectangulaire ou carrée.

23. Module à membrane selon une ou plusieurs des revendications 20 ou 21, **caractérisé en ce que** la partie médiane d'enveloppe (1) a une section transversale intérieure semi-circulaire.

24. Module à membrane selon une ou plusieurs des revendications 20 à 23, **caractérisé en ce que** le dispositif de fermeture (27, 36) est amovible.

25. Module à membrane selon une ou plusieurs des revendications 20 à 24, **caractérisé en ce qu'**au moins un groupe de membranes à fibres creuses (8, 9) est formé d'au moins deux sous-groupes de membranes à fibres creuses disposés en couches stratifiées.

26. Module à membrane selon la revendication 25, **caractérisé en ce que** chaque couche contient seulement des membranes à fibres creuses d'un même sous-groupe et que les membranes à fibres creuses dudit groupe, au nombre d'au moins un, sont scellées de manière telle qu'elles soient ouvertes seulement à une extrémité, et que les pièces d'extrémité dans lesquelles les extrémités de membranes à fibres creuses appartenant à des sous-groupes différents sont scellées, sont disposées en des extrémités opposées de la partie médiane d'enveloppe (1).

27. Module à membrane selon une ou plusieurs des revendications 20 à 25, **caractérisé en ce que** les membranes à fibres creuses sont scellées de manière telle que leurs deux extrémités traversent la masse moulable (10, 11) et sont ouvertes, les membranes à fibres creuses (8, 9) séparées en groupes communiquant par leur extrémité ouverte les unes avec un dispositif d'entrée (12, 15) et les autres avec un dispositif de sortie (13, 14).

28. Module à membrane selon une ou plusieurs des revendications 20 à 25, **caractérisé en ce que** les membranes à fibres creuses d'au moins un groupe sont ouvertes à une extrémité et fermées à l'autre extrémité.

29. Module à membrane selon une ou plusieurs des revendications 20 à 28, **caractérisé en ce que** deux groupes de membranes à fibres creuses (8, 9) sont disposés dans le module de membrane.

30. Module à membrane selon une ou plusieurs des revendications 20 à 29, **caractérisé en ce qu'**il présente dans la chambre extérieure (17) autour des membranes à fibres creuses (8, 9), sur la longueur de la partie médiane d'enveloppe (1), au moins un dispositif de séparation (28, 33, 34, 35) qui s'étend essentiellement transversalement à ladite longueur.

31. Module à membrane selon la revendication 30, **caractérisé en ce que** le dispositif de séparation (28), au nombre d'au moins un, divise la chambre extérieure en chambres (29, 30) séparées de manière essentiellement étanche au fluide.

32. Module à membrane selon la revendication 31, **caractérisé en ce qu'**au moins une des chambres (29, 30) comporte au moins un dispositif d'entrée (18, 31).

33. Module à membrane selon la revendication 30, **caractérisé en ce que** le dispositif de séparation (33, 34, 35) au nombre d'au moins un, s'étend sur une partie de la surface en section transversale de la partie médiane d'enveloppe (1).

34. Module à membrane selon une ou plusieurs des revendications 20 à 33, **caractérisé en ce qu'**il contient une succession de couches des différents groupes de membranes à fibres creuses (8, 9) disposées en alternance.

35. Module à membrane selon une ou plusieurs des revendications 20 à 34, **caractérisé en ce que** les membranes à fibres creuses (8, 9) des différents groupes sont liées en nappes de fibres creuses.

36. Module à membrane selon la revendication 35, **caractérisé en ce que** les membranes à fibres creuses (8, 9) sont liées à la nappe de fibres creuses concernée au moyen de fils textiles.

37. Module à membrane selon une ou plusieurs des revendications 35 ou 36, **caractérisé en ce que** des nappes de fibres creuses sont empilées en couches.

38. Utilisation du module à membrane selon une ou plusieurs des revendications 20 à 37 pour séparer des éniantomères.

39. Utilisation du module à membrane selon une ou plusieurs des revendications 20 à 37 pour élever ou obtenir des systèmes de culture de cellules.

40. Utilisation du module à membrane selon une ou plusieurs des revendications 20 à 37 pour le traitement sélectif de fluides.
